# EUROPEAN PATENT APPLICATION

(11) **EP 4 582 902 A1**
(43) Date of publication of application: **09.07.2025**
(21) Application number: 24794327.7
(22) Date of filing: 22.10.2024
(51) Int. Cl.: G06F 1/16

(54) **ELECTRONIC DEVICE COMPRISING SUPPORT MEMBER**

(30) Priority: 20.11.2023 KR 20230160232; 11.12.2023 KR 20230179111
(71) Applicant: Samsung Electronics Co., Ltd, Suwon-si, Gyeonggi-do 16677 (KR)
(72) Inventor: JIN, Myoungdae, Suwon-si, Gyeonggi-do 16677 (KR); KIM, Heesung, Suwon-si, Gyeonggi-do 16677 (KR); NAM, Kyungdon, Suwon-si, Gyeonggi-do 16677 (KR); SONG, Seongjun, Suwon-si, Gyeonggi-do 16677 (KR); CHO, Kiho, Suwon-si, Gyeonggi-do 16677 (KR); HAN, Seungyub, Suwon-si, Gyeonggi-do 16677 (KR); HUNG, Hyunju, Suwon-si, Gyeonggi-do 16677 (KR)
(74) Representative: Appleyard Lees IP LLP
(86) International application number: PCT/KR2024/016099
(87) International publication number: WO 2025/110494

(57) **Abstract**

An electronic device that includes a flexible display, a first housing, a second housing that is slidably combined with the first housing, a support member that supports at least a portion of the flexible display and moves according to a sliding operation of the second housing relative the first housing, a guide rail that is disposed in the first housing and guides a movement of the support member, a guide block that is disposed in the second housing and slidably combined from the guide rail to a first length, and a fastening component that detachably connects the guide block to the second housing, wherein the second housing may be configured to be slidable by a second length greater than the first length through disassembly of the fastening component.

## Description

### [Technical Field]

Embodiments of the disclosure relate to an electronic device including a support member.

### [Background Art]

Electronic devicesare gradually becoming slimmer and are being improved to increase their rigidity, to offer strengtheneddesign aspects, and in order to differentiate by offering additional functional features. In addition, electronic devicesare being developed in various shapes, departing from a uniform rectangular shape. Electronic deviceswith a deformable structure have been developed, to provide convenient portability and still offer a large-screen display when in use. Such electronic devicesinclude a rollable electronic device, also referred to as a slidable electronic device, that can vary the display area of a flexible display, for example a rollable display, that is supported by housings that slide relative to each other. The rollable electronic device require an efficient separation structure, such as for maintenance.

The above information may be presented as background information only to assist with an understanding of the disclosure. No determination has been made, and no assertion is made, as to whether any of the above might be applicable as prior art with regard to the disclosure.

### [Disclosure of Invention]

### [Technical Problem]

An electronic device in the form of a rollable electronic device,e.g., a slidable electronic device,may comprise a display area of a flexible display, e.g., a rollable display, an expandable display, or a stretchable display, that can be increased and/or reduced depending on the operating state of the rollable electronic device. A rollable electronic device which these characteristics may include a first housing and a second housing which are movably combined with each other. For example, the first and second housingsmay operate to be slidable, relative to each other, and further to support at least a portion of the flexible display. The flexible displayin such a rollable device may have a first display area in a slide-in state and to have a second display area in a slide-out state, the second display area being larger than the first display area.

The rollable electronic device may include a support member.e.g., a bendable member, a multi-bar assembly, or a support bar assembly, which moves together with the second housing. The support membermay slide a predetermined distance from the first housing, to support a rear surface of the flexible display. The support member may include a plurality of support bars that are rotatably arranged with respect to one another, and with the rollable device in the slide-in state the support member may be accommodated together with the flexible display at least partially in an internal space of the first housing. The support member may be guided by a pair of guide rails arranged on both sides of the first housing.

The support member may be partially arranged in the internal space of the first housing even when the electronic device is in the slide-out state. This combination of structural elements in the rollable electronic device may be an obstacle to replacement of electronic components, e.g., a battery, arranged in the first housing, such as for repair of the rollable electronic device or for maintenance thereof. For example, due to this combination of structural elements, the process of disassembling can be complex or involve steps that are difficult to perform. These considerations apply for disassembly of at least a portion of the support member to enable electronic component replacement, or for processes of separating a pair of guide railstomove the second housing out of the internal space of the first housing. In addition, these processes may not comply with design requirements for minimizing environmental impactthat are required to be designed into devices starting from product development stage. The EU's eco-design policy introduces a framework for such requirements.

### [Solution to Problem]

Embodiments of the disclosure aim to provide an electronic device including a support member that facilitates efficient maintenance work, including enabling efficient access for maintenance and/or repair.

An electronic device including a support member that facilitates maintenance work, while not necessitating detachment of a guide rail isdescribed.

An electronic device including a support member that complies with design requirements for minimizing environmental load is described.

However, the problems to be solved in the disclosure are not limited to the above-mentioned problems and may be expanded in various ways without departing from the scope of the disclosure.

An electronic device is provided, as set out in accompanying claim 1.. Other optional features are set out in the accompanying dependent claims.

An electronic device is provided, including a flexible display, a first housing, a second housing that is slidably combined with the first housing, a support member that supports at least a portion of the flexible display and moves according to a sliding operation of the second housing relative the first housing, a guide rail that is disposed in the first housing and has a guide slit for guiding a movement of the support member, and a guide block that is disposed in the second housing and slidably combined from the guide rail to a first length, wherein the support member includes a plurality of support bars arranged at a designated interval on a rear surface of the flexible display and each including a guide pin protruding at an end to be accommodated in the guide slit, anda first guide pin of a first support bar arranged at an end of the support member among the plurality of support bars may have a first protruding length smaller than second protruding lengths of the remaining guide pins.

### [Advantageous Effects of Invention]

A guide block fixed to the second housing and slidably combined with the guide rail fixed to the first housing is configured to allow disassembly, and the support member is configured to be additionally movable in the slide-out direction from the slide-out state in a state where the fixation of the guide block is released. This can help to reduce interference with the support member, thereby facilitating the easy disassembly of electronic components placed in the first housing.In addition, since disassemblyof the guide rail disposed in the first housing and guiding the support member is unnecessary, work efficiency can be improved.

In addition, various effects explicitly or implicitly appreciated through the disclosure may be provided.

The effects obtainable from the disclosure are not limited to the above-mentioned effects, and other effects not mentioned will be clearly understood from the following description by a person having ordinary skill in the art to which the disclosure belongs.

### [Brief Description of Drawings]

In connection with the description of the drawings, the same or similar reference numerals may be used for the same or similar components.
FIG. 1 is a block diagram of an electronic device in a network environment.
FIGS. 2A and 2B are views illustrating the front and rear of an electronic device in a slide-in state.
FIGS. 3A and 3B are views illustrating the front and rear of an electronic device in a slide-out state.
FIG. 3C is a view illustrating the front of an electronic device in an additional slide-out state.
FIG. 4A is an exploded perspective view of an electronic device.
FIG. 4B is a cross-sectional view of a part of the flexible display taken along line 4b-4b of FIG. 4A.
FIG. 5A is a cross-sectional view of the electronic device taken along line 5a-5a of FIG. 2A.
FIG. 5B is a cross-sectional view of the electronic device taken along line 5b-5b of FIG. 3A.
FIG. 6A is a perspective view of a part of an electronic device in which a guide rail and a guide block are combined.
FIG. 6B is a side view of a part of an electronic device.
FIG. 6C is a plan view of the electronic device taken along line 6c-6c of FIG. 6B.
FIG. 7A is a cross-sectional view of the electronic device in a slide-in state taken along line 7-7 of FIG. 6A.
FIG. 7B is a cross-sectional view of the electronic device in a slide-out state taken along line 7-7 of FIG. 6A.
FIG. 8A is a schematic diagram of a part of a support member.
FIG. 8B is a schematic diagram of a guide rail.
FIG. 9A is a diagram illustrating a combination state of a support member and a guide rail in a slide-out state according.
FIG. 9B is a cross-sectional view taken along line 9b-9b of FIG. 9A.
FIG. 9C is a cross-sectional view taken along line 9c-9c of FIG. 9A.
FIG. 10A is a diagram illustrating a combination state of a support member and a guide rail in an additional slide-out state.
FIG. 10B is a cross-sectional view taken along line 10b-10b of FIG. 10A.
FIG. 10C is a drawing illustrating a state in which a first support bar is disassembled from a guide rail in an additional slide-out.
FIG. 10D is a drawing illustrating an operation of disassembling a battery cover and a battery in an additional slide-out.
FIG. 11A is a drawing illustrating a hooking structure of first and second housings.
FIG. 11B is a drawing illustrating the area 11b of FIG. 11A.
FIG. 12 is a drawing illustrating a position of a first support bar in an additional slide-out state.

### [Mode for the Invention]

Hereinafter, embodiments of the disclosure will be described in detail with reference to the accompanying drawings so that those ordinarily skilled in the art to which the disclosure pertains can easily practice them. However, the disclosure may be implemented in many different forms without being limited to those embodiments described herein. In relation to the description of the drawings, identical or similar reference symbols may be used for the same or similar components. Additionally, in the drawings and related descriptions, descriptions of well-known functions and configurations may be omitted for clarity and brevity.

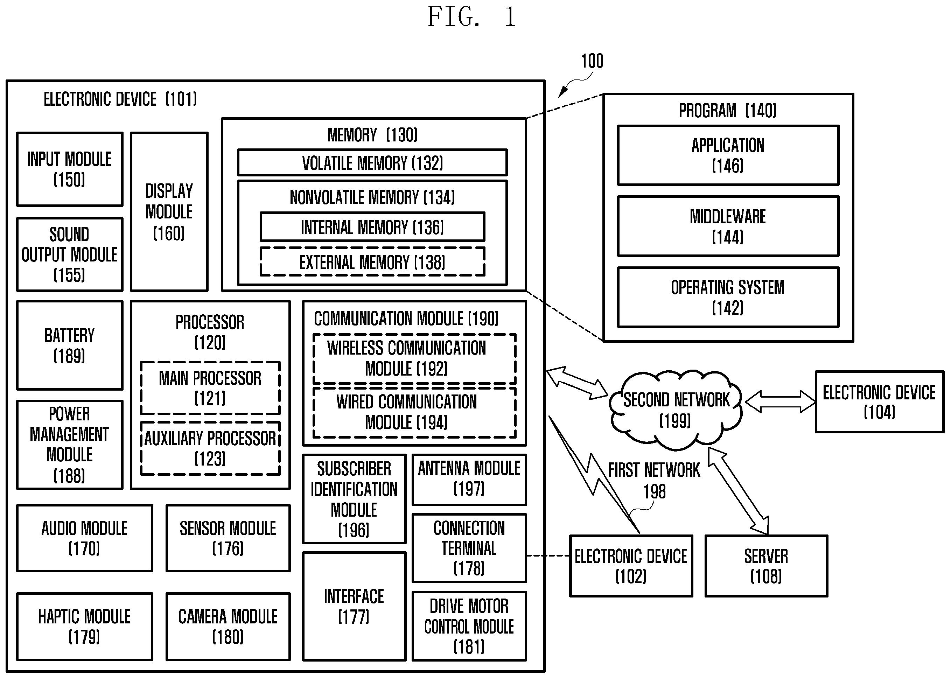

FIG. 1 is a block diagram illustrating an electronic device in a network environment.In the following description, features which are described with reference to examples in parentheses are to be interpreted as optionally including being comprised of or formed of or with one, some or all of such examples.

With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., via a wired connection) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., via a wired connection) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

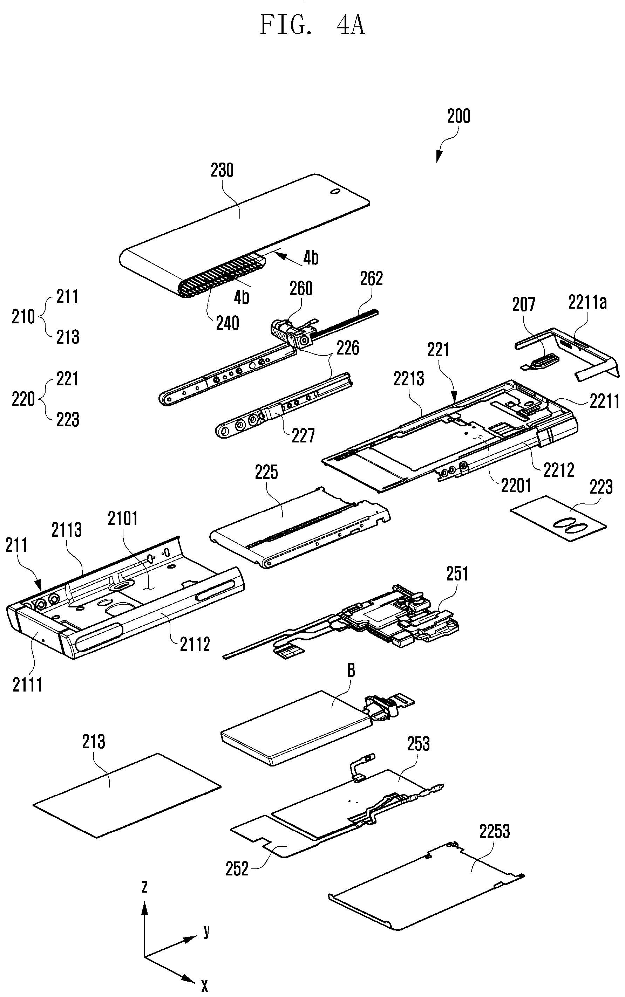

According to various embodiments, the sensor module 176 may include a movement distance detection sensor to detect a movement distance of a second housing (e.g., a second housing 220 in FIG. 4a) from a first housing (e.g., a first housing 210 in FIG. 4a) of an electronic device (e.g., an electronic device 200 of FIG. 4a). In one embodiment, through movement of the second housing 220 from the first housing 210, the sensor module 176 may detect a slide-in state being a first state, a slide-out state being a second state, or an intermediate state being a third state between the slide-in state and the slide-out state. In a certain embodiment, the processor 120 may detect the movement distance in real time through the sensor module 176 while the second housing 220 is moved from the first housing 210, and control the display module 160 to display an object in correspondence to the changing display area through a flexible display (e.g., flexible display 230 in FIG. 4a). In one embodiment, the electronic device 101 may include a drive motor control module 181 to control the operation of a drive motor (e.g., DC motor or stepping motor) (e.g., drive motor 260 in FIG. 4a) disposed inside the electronic device. In an embodiment, the drive motor control module 181 may be replaced by the processor 120.

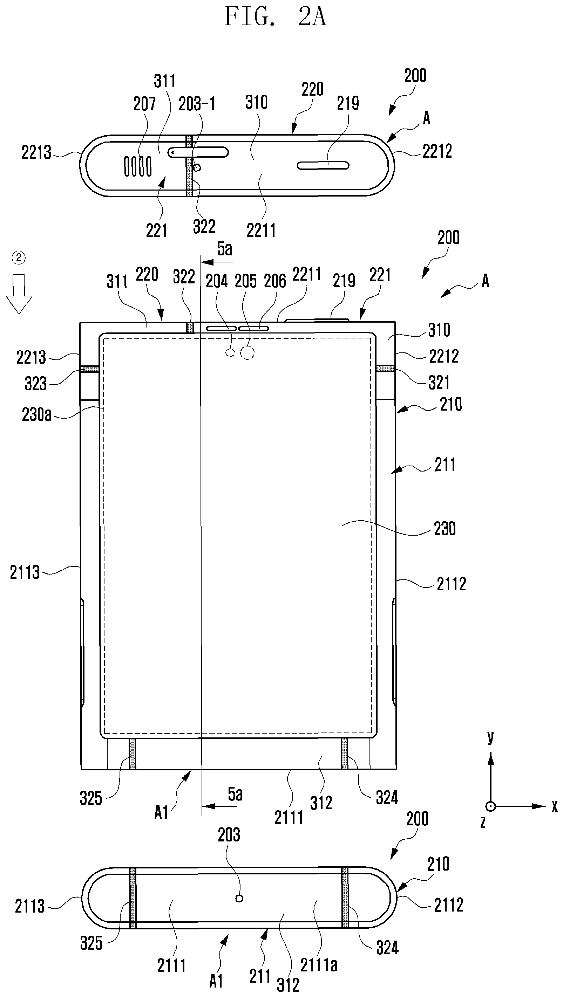

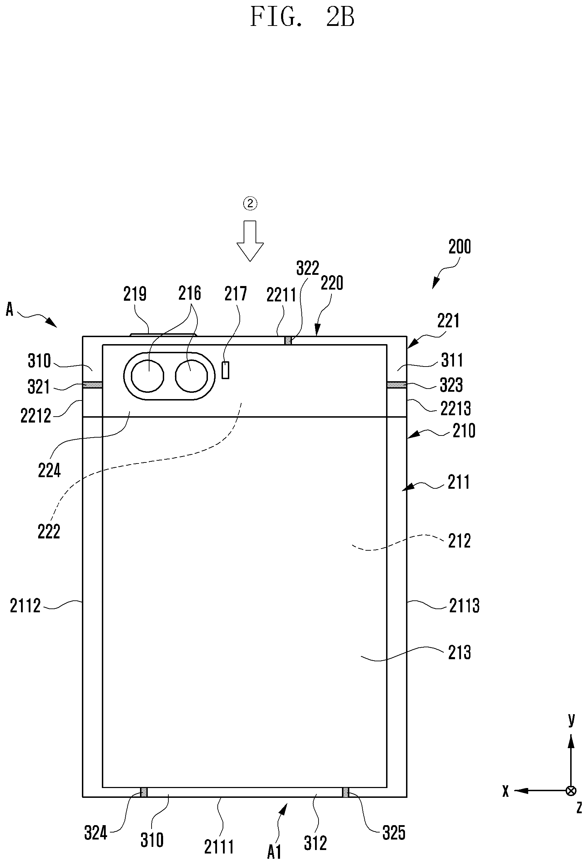

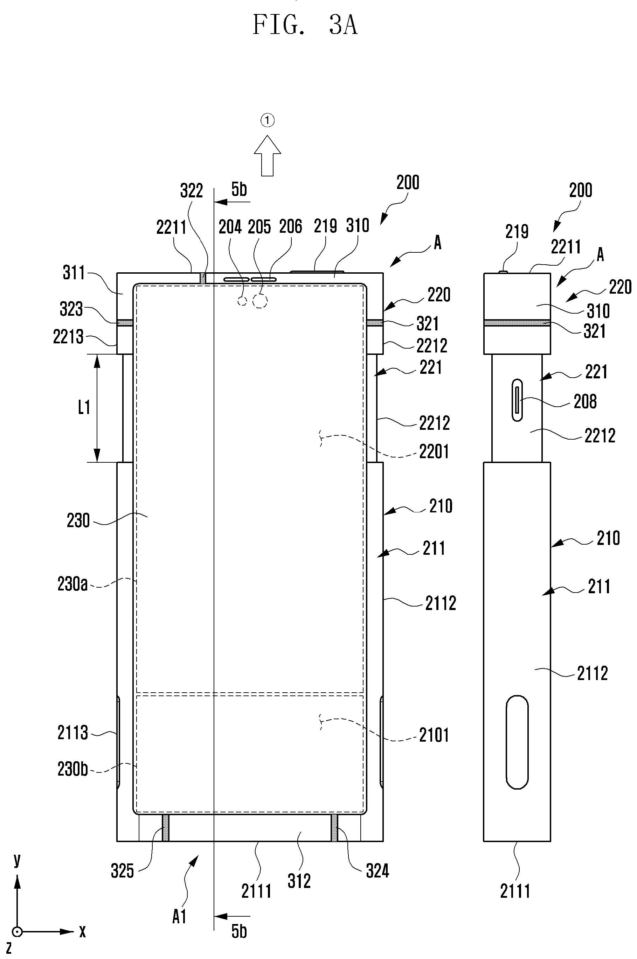

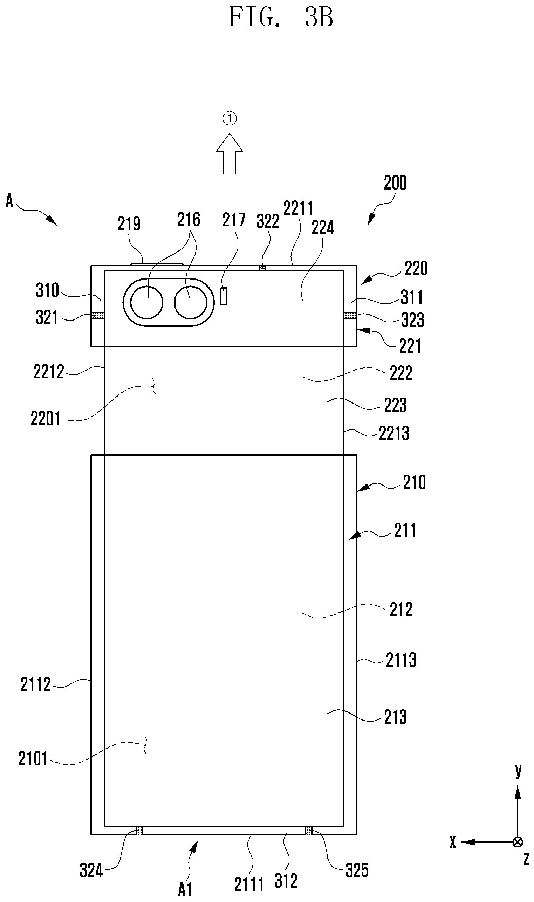

FIGS. 2A and 2B are views illustrating the front and rear of an electronic device in a slide-in state. FIGS. 3A and 3B are views illustrating the front and rear of an electronic device in a slide-out state.

The electronic device 200 in FIGS. 2A to 3B may be similar to the electronic device 101 in FIG. 1 at least in part.

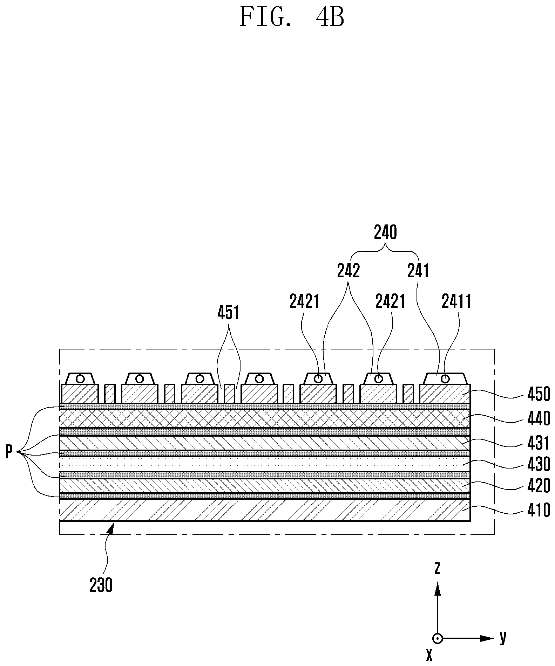

With reference to FIGS. 2A to 3B, the electronic device 200 includes a first housing 210 (e.g., a book cover or a first housing structure), a second housing 220 (e.g., a front cover or a second housing structure) slidably combined with the first housing 210 in a specified direction (e.g., direction ①or direction ②) (e.g., ±y-axis direction), and a flexible display 230 (e.g., a rollable display, an expandable display, or a stretchable display) supported through at least a part of the first and second housings 210 and 220.The second housing 220 is slidably combined with the first housing 210 so as to slide out in the first direction (direction ①) or slide in in the second direction (direction ②) opposite to the first direction (direction ①), based on the first housing 210. The electronic device 200 may be changed to a first state, that is, a slide-in state, when at least a portion of the second housing 220 is accommodated in at least a portion of a first space 2101 formed by the first housing 210. The electronic device 200 may be changed to a second state, that is, a slide-out state, when at least a portion of the second housing 220 is moved outwardly (e.g., in the direction ①) from the first space 2101. The electronic device 200 includes a support member (e.g., the support member 240 in FIG. 4A) (e.g., a bendable member, an articulated hinge module, a multi-bar assembly, a support bar assembly, or a multi-bar) that, in the slide-out state, forms at least partially the same plane as at least a portion of the second housing 220 and, in the slide-in state, is accommodated in the first space 2101 of the first housing 210 by bending. In an embodiment, at least a portion of the flexible display 230 is disposed to be supported by at least a portion of the second housing 220. In an embodiment, at least a portion of the remaining portion of the flexible display 230 is disposed to be supported by the support member (e.g., the support member 240 in FIG. 4A). The support member (e.g., the support member 240 in FIG. 4A) is disposed to be attached to the rear surface of the flexible display 230. In an embodiment, in the slide-in state, at least a portion of the flexible display 230is disposed so as to be invisible from the outside, by being accommodated in the firstspace 2101 of the first housing 210 by bending while being supported by the support member (e.g., the support member 240 in FIG. 4). In an embodiment, in the slide-out state, at least a portion of the flexible display 230 is disposed to be visible from the outside while being supported by the support member (e.g., the support member 240 in FIG. 4) that forms at least partially the same plane as the second housing 220.

The first housing 210 includes a first lateral member 211, and the second housing 220 includes a second lateral member 221. The first lateral member 211 may have a first side surface 2111 disposed on a lower side of the electronic device 200 and having a first length, a second side surface2112 extending in a vertical direction (e.g., in the y-axis direction) from one end of the first side surface2111 and having a second length, and a third side surface2113 extending in parallel with the second side surface2112 from the other end of the first side surface2111 and having the second length. The first lateral member 211 is formed of a conductive material (e.g., metal) at least in part. In some embodiments, the first lateral member 211 is formed by a combination of a conductive material and a non-conductive material (e.g., polymer). The first housing 210 includes a first extension member 212 extending from at least a portion of the first lateral member 211 to at least a portion of the first space 2101. The first extension member 212 is formed integrally with the first lateral member 211. In some embodiments, the first extension member 212 isformed separately from the first lateral member 211 and structurally combined with the first lateral member 211.

The second lateral member 221 may have a fourth side surface 2211 disposed on an upper side of the electronic device 200 and having a third length, a fifth side surface 2212 extending in a vertical direction (e.g., in the negative y-axis direction) from one end of the fourth side surface 2211 to correspond to the second side surface 2112 and having a fourth length, and a sixth side surface 2213 extending in parallel with the fifth side surface 2212 from the other end of the fourth side surface 2211 to correspond to the third side surface 2113 and having the fourth length.The second lateral member 221 is formed of a conductive material (e.g., metal) at least in part. In some embodiments, the second lateral member 221 is formed by a combination of a conductive material and a non-conductive material (e.g., polymer). The second housing 210 includes a second extension member 222 extending from at least a portion of the second lateral member 221 to at least a portion of the second space 2201. The second extension member 222 is formed integrally with the second lateral member 221. In some embodiments, the second extension member 222 isformed separately from the second lateral member 221 and structurally combined with the second lateral member 221.

The second side surface 2112 and the fifth side surface 2212 is slidably combined with each other. The third side surface 2113 and the sixth side surface 2213 is slidably combined with each other. In an embodiment, in the slide-in state, a portion of the fifth side surface 2212 may overlap with the second side surface 2112, so as to be substantially invisible from the outside. In an embodiment, in the slide-in state, the remaining portion of the fifth side surface 2212 is disposed to be visible from the outside. In some embodiments, in the slide-in state, the fifth side surface2212 isdisposed to overlap with the second side surface2112 so as to be substantially invisible from the outside. In an embodiment, in the slide-in state, a portion of the sixth side surface 2213 may overlap with the third side surface 2113, so as to be substantially invisible from the outside. In an embodiment, in the slide-in state, the remaining portion of the sixth side surface 2213 is disposed to be visible from the outside. In some embodiments, in the slide-in state, the sixth side surface 2213 is disposed to overlap with the third side surface 2113 so as to be substantially invisible from the outside. In an embodiment, in the slide-in state, at least a portion of the second extension member 222 is disposed to be visible from the outside.In some embodiments, in the slide-in state, the second extension member 222 may overlap with the first extension member 212, so as to be substantially invisible from the outside.

The first housing 210 includes a first rear cover 213 combined with at least a portion of the first lateral member 211. The first rear cover 213 isdisposed to be combined with at least a portion of the first extension member 212. In some embodiments, the first rear cover 213 may be formed integrally with the first lateral member 211. The first rear cover 213 may be formed of polymer, coated or coloured glass, ceramic, metal (e.g., aluminium, stainless steel (STS), or magnesium), or a combination of at least two of these materials. In some embodiments, the first rear cover 213 may extend to at least a portion of the first lateral member 211. In some embodiments, the first rear cover 213 may be omitted, and at least a portion of the first extension member 212 may replace the first rear cover 213.

The second housing 220 includes a second rear cover 223 combined with at least a portion of the second lateral member 221. The second rear cover 223 isdisposed to be combined with at least a portion of the second extension member 222. The second rear cover 223 may be formed integrally with the second lateral member 221. The second rear cover 223 may be formed of polymer, coated or coloured glass, ceramic, metal (e.g., aluminium, stainless steel (STS), or magnesium), or a combination of at least two of these materials. In some embodiments, the second rear cover 223 may extend to at least a portion of the second lateral member 221. In some embodiments, the second rear cover 223 may be omitted, and at least a portion of the second extension member 222 may replace the second rear cover 223. The second housing 220 includes a window cover 224 disposed on at least a portion of the second rear cover.In the slide-in state, the window cover 224 is disposed on an area exposed to the outside of the second housing 220, and is formed of a material that facilitates detection of an external environment through at least one camera module 216 and/or sensor module 217 disposed in the internal space 2201 of the second housing 220. For example, the window cover 224 may be formed of a glass and/or polymer material in which at least an area corresponding to the camera module 216 and/or sensor module 217 is formed transparently. In some embodiments, the electronic device 200 may further include a cover member 2111a disposed to cover at least a portion of a first side surface2111 of the first housing 210.

**The** flexible display 230 includes a first portion 230a (e.g., a flat portion) that is always visible from the outside, and a second portion 230b (e.g., a bendable portion or a bending portion) that extends from the first portion 230a and is accommodated in the first space 2101 of the first housing 210 in an at least partially bentconfiguration,so as to be invisible from the outside in the slide-in state. In an embodiment, at least a part of the first portion 230a is disposed to be supported by the second housing 220, and the remaining part of the first portion 230a and the second portion 230b is disposed to be at least partially supported by the support member (e.g., the support member 240 in FIG. 4). In an embodiment, in a state that the second housing 220 slides out along the first direction (direction ①), the second portion 230b of the flexible display 230 is disposed to form substantially the same plane as the first portion 230a while being supported by the support member (e.g., the support member 240 in FIG. 4), and be visible from the outside. In a state that the second housing 220 slides in along the second direction (direction ②), the second portion 230b of the flexible display 230 is disposed to be accommodated in the first space 2101 of the first housing 210 and thus not be visible from the outside. Therefore, as the second housing 220 is moved in a sliding manner along a specified direction (e.g., ±y axis direction) from the first housing 210, the display area of the flexible display 230 can be changed.

The flexible display 230 may have a first display area (e.g., an area corresponding to the first portion 230a) in the slide-in state (e.g., the first state). In an embodiment, in the case of transitioning to the slide-out state (e.g., the second state) in which the second housing 220 is moved by a first length L1 (e.g., sliding stroke) based on the first housing 210, the flexible display 230 may further secure a second display area (e.g., an area corresponding to the second portion 230b) corresponding to the first length L1 in addition to the first display area.In the case of transitioning from the slide-in state to the slide-out state, the flexible display 230transitions to have an expanded display area.

The electronic device 200 includesan input device (e.g., a microphone 203-1), a sound output device (e.g., a call receiver 206 and/or a speaker 207), sensor modules 204 and 217, a camera module (e.g., a first camera module 205 or a second camera module 216), a connector port 208, a key input device 219,and may include an indicator (not shown). The electronic device 200 may include another input device (e.g., a microphone 203) disposed in the first housing 210. In some embodiments, the electronic device 200 may be configured so that at least one of the above-described components is omitted or other components are additionally included. In certain embodiments, at least one of the above-described components may be disposed in the first space 2101 of the first housing 210.

The input device may comprisethe microphone 203-1. In some embodiment, the input device (e.g.,the microphone 203-1) may include a plurality of microphones arranged to detect the direction of sound. The sound output device includes, for example, the call receiver 206 and the speaker 207. The speaker 207 may communicate with the outside through at least one speaker hole formed in the second housing 220 at a position (e.g., the fourth side surface 2212) that is always exposed to the outside regardless of the slide-in/slide-out state. In the slide-out state, the connector port 208 may communicate with the outside through a connector port hole formed in the second housing 220. In an embodiment, in the slide-in state, the connector port 208 may be hidden so as not to be visible from the outside. In some embodiments, in the slide-in state, the connector port 208 may communicate with the outside through an opening formed in the first housing 210 and formed to correspond to the connector port hole. In some embodiments, the call receiver 206 includes a speaker (e.g., piezo speaker) that operates without a separate speaker hole.

The sensor modules 204 and 217 may generate electrical signals or data values corresponding to the internal operating state of the electronic device 200 or the external environmental state. The sensor modules 204 and 217 includes, for example, a first sensor module 204 (e.g., a proximity sensor or an illuminance sensor) disposed on the front of the electronic device 200 and/or a second sensor module 217 (e.g.,a heart rate monitoring (HRM) sensor) disposed on the rear of the electronic device 200. The first sensor module 204 may be disposed under the flexible display 230on the front of the electronic device 200. The first sensor module 204 and/or the second sensor module 217 includesat least one of a proximity sensor, an illuminance sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a colour sensor, an infrared (IR) sensor, a biometric sensor, a temperature sensor, or a humidity sensor.

The camera module may include a first camera module 205 disposed on the front of the electronic device 200 and a second camera module 216 disposed on the rear of the electronic device 200. The electronic device 200 may include a flash (not shown) located near the second camera module 216. The camera modules 205 and 216 may include one or more lenses, an image sensor, and/or an image signal processor. The first camera module 205 may be disposed under the flexible display 230 and configured to photograph a subject through a part of the active area (e.g., display area) of the flexible display 230.

The first camera module 205 among the camera modules and the first sensor module 204 among the sensor modules 204 and 217 may be disposed to detect the external environment through the flexible display 230. For example, the first camera module 205 or thefirst sensor module 204 may be disposed to be exposed tothe external environmentthrough a transparent area or a perforated opening formed in the flexible display 230 in the second space 2201 of the second housing 220. The area of the flexible display 230, facing the first camera module 205, is a part of the display area that displays contents and may be formed as a transparent area with a specified transmittance. The transparent area may be formed to have a transmittance ranging from about 5% to about 20%. This transmission area includes an area overlapping with an effective area (e.g., afield of view area) of the first camera module 205 through which light for generating an image in the image sensor passes. For example, the transmission area of the flexible display 230 includes an area where pixel density and/or wiring density are lower than the surrounding area. For example, the transparent area maybe replacedwith the above-described opening. For example, the camera modules 205 may include an under display camera (UDC). In some embodiments, the sensor module 204 may be disposed to perform its function without being visually exposed through the flexible display 230 in the second space 2201 of the electronic device 200.

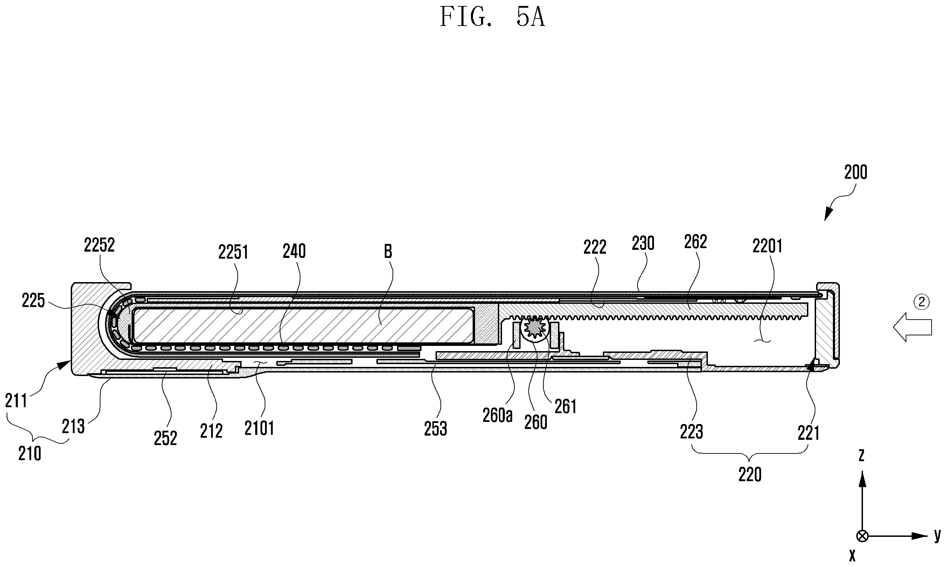

The slide-in/slide-out operations of the electronic device 200 may be performed automatically. For example, the slide-in/slide-out operations of the electronic device 200 may be performed through a gear engagement of a driving motor(e.g., the driving motor 260 in FIG. 4A) including a pinion gear (e.g., the pinion gear 261 in FIG. 5A) disposed in the second space 2201 of the second housing 220, and a rack gear (e.g., the rack gear 262 in FIG. 5A) disposed in the first space 2101 of the first housing 210, extending to at least a part of the second space 2201, and engaged with the pinion gear (e.g., the pinion gear 261 in FIG. 5A).For example, a processor (e.g., the processor 120 in FIG. 1) of the electronic device 200 may operate thedriving motor (e.g., the driving motor 260 in FIG. 4A) disposed inside the electronic device 200 ondetectionof a triggering signal for transition from the slide-in state to the slide-out state or from the slide-out state to the slide-in state. The triggering signalmay include a signal according to selecting (e.g., touching) an object displayed on the flexible display 230 or a signal according to manipulating (e.g., pressing) a physical button (e.g., a key button) included in the electronic device 200.

The electronic device 200 has a structure in which the second housing 220 slides in and/or out relative to the first housing 210 along the longitudinal direction (e.g., vertical direction) (e.g., ±y-axis direction) of the electronic device 200, but it is not limited thereto. For example, the electronic device 200 may have a structure in which the second housing 220 slides in and/or out relative to the first housing 210 along the width direction (e.g., horizontal direction) (e.g., ±x-axis direction) perpendicular to the longitudinal direction of the electronic device 200. In some embodiments, the electronic device 200 may be formed such that the length of the first side surface 2111 of the first housing 210 is greater than the length of the second side surface 2112. In this case, the length of the fourth side surface 2211 of the second housing 220 can also be formed to be greater than the length of the fifth side surface 2212.

The electronic device 200 includes an antenna (A) (e.g., a first antenna) disposed through at least a portion of a second lateral member 221 of the second housing 220. The electronic device 200 includes at least one unit conductive portion 310 and 311 formed through at least one segment 321, 322, and 323. The electronic device 200 includes a first conductive portion 310, which is disposed through a first segment 321 disposed on the fifth side surface 2212 and a second segment 322 disposed on the fourth side surface 2211 in the second lateral member 221.The first conductive portion 310 may be electrically connected to a wireless communication circuit (e.g., the wireless communication module 192 in FIG. 1) of the electronic device 200 so as to be used as at least one antenna (A) operating in at least one designated frequency band (e.g., a legacy band or an NR band). For example, the at least one designated frequency band includes a frequency band ranging from about 600MHz to 1000MHz. In some embodiments, the second conductive portion 311 disposed through a third segment 323 disposed on the sixth side surface and the second segment 322 may also be used as an antenna. The electronic device 200 may also include another antenna (A1) (e.g., a second antenna) that operates through a third conductive portion 312 disposed through a fourth segment 324 and a fifth segment 325 separately disposed on the first side surface 2111 of the first housing 210.

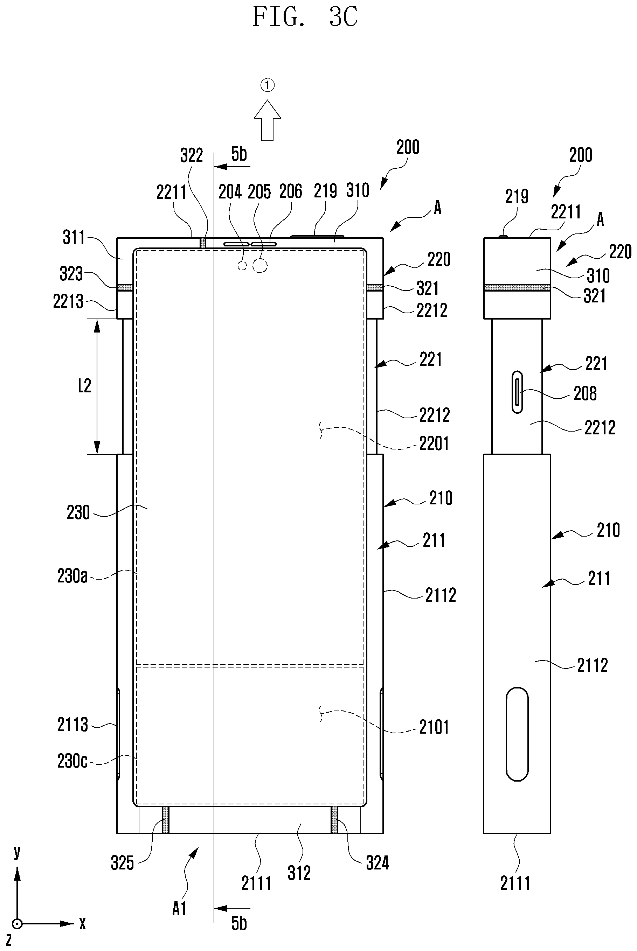

FIG. 3C is a view illustrating the front of an electronic device in an additional slide-out state.

With reference to FIG. 3C, the electronic device 200 may be configured such that the second housing 220 is additionally moved by a designated distance in the slide-out direction (e.g., direction ①) from the slide-out state when it is necessary to separate at least one electronic component (e.g., the battery (B) in FIG. 4a) disposed in the first space 2101 of the first housing 210 for maintenance. For example, the electronic device 200 may implement a normal sliding operation for transition from the slide-in state (e.g., the first state) to the slide-out state (e.g., the second state).In an embodiment, when a guide block (e.g., the guide block 227 in FIG. 4A) is separated from the second housing 220 for maintenance, the second housing 220 may be moved in the slide-out direction (e.g., direction ①) by a second distance L2 greater than a first distance (e.g., the first distance L1 in FIG. 3A). In this case, the flexible display 230 may be positioned such that a third portion 230c having a larger area than a second portion (e.g., the second portion 230b in FIG. 3A) is visible from the outside. In an embodiment, at least a part of the third portion 230c may be a non-display area (e.g., a black matrix (BM) area).For example, through this additional slide-outoperation, the support member (e.g., the support member 240 in FIG. 4A) disposed to overlap with an electronic component and support the flexible display 230 even in the slide-out state (e.g., the second state) is moved to a position where it does not overlap with the electronic component, thereby helping in easy separation of the electronic component.

FIG. 4A is an exploded perspective view of an electronic device.

In describing the electronic device 200 of FIG. 4A, components that are substantially the same as those of the electronic device 200 of FIGS. 2A to 3B are given the same reference numerals, and detailed descriptions thereof may be omitted.

With reference to FIG. 4A, the electronic device 200 includesthe first housing 210 having the first space 2101, the second housing 220 slidably combined with the first housing 210 and having the second space 2201, the support member 240 (e.g., a bendable member, a support bar assembly, or a multi-bar assembly) fixed to at least a portion of the second housing 220 and at least partially bendably accommodated into the first space 2101 according to the slide-in operation, the flexible display 230 disposed to be supported by at least a portion of the support member 240 and the second housing 220, and a driving unit (e.g., a driving module or a driving mechanism) that drives the second housing 220 in the slide-in direction (e.g., the negative y-axis direction) and/or the slide-out direction (e.g., the positive y-axis direction) from the first housing 210. In some embodiments, the first housing 210 may be slidably combined with the second housing 220 depending on the arrangement position of the driving unit (e.g., the driving motor 260 and the rack gear 262). The first housing 210 includes the first rear cover 213 (e.g., a first rear bracket) combined with at least a portion of the first lateral member 211 (e.g., at least a portion of the first extension member 212). The first space 2101 may be formed through a combination of the first lateral member 211 and the first rear cover 213. The electronic device 200 includes a side cover 2211a (e.g., a dielectric cover) disposed on the fourth side surface 2211 of the second lateral member 221.

The second housing 220 includesthe second lateral member 221 and the second rear cover 223 (e.g., a second rear bracket or a window cover) combined with at least a portion of the second lateral member 221 (e.g., at least a portion of the second extension member 222). The second space 2201 may be formed through a combination of the second lateral member 221 and the second rear cover 223.

The driving unit (e.g., the driving module) includes the driving motor 260 disposed in the second space 2201 and having the pinion gear (e.g., the pinion gear 261 in FIG. 5A), and the rack gear 262 fixed to the support bracket 225 disposed in the first space 2101, extending from the first space 2101 to the second space 2201, and disposed in gear engagement with the pinion gear 261. The electronic device 200 may further include a reduction module (e.g., a reduction gear assembly) structurally combined with the driving motor 260 to reduce a rotational speed and increase a driving force by being combined with the driving motor. The driving motor 260 may be disposed to be supported by at least a portion of the second lateral member 221 (e.g., the second extension member 222 in FIG. 5A) in the second space 2201 of the second housing 220.The driving motor 260 may be disposed to be supported by a motor bracket (e.g., the motor bracket 260a in FIG. 5A) fixed to the second extension member 222. In some embodiments, the rack gear 262 may be guided in a sliding direction (e.g., in the ±y-axis direction) through the motor bracket 260a. Therefore, when the electronic device 200 is assembled, the pinion gear (e.g., the pinion gear 261 in FIG. 5A) may maintain a state of gear engagement with the rack gear 262, and the pinion gear 261 provided with the driving force of the driving motor 260 may move along the rack gear 262, thereby causing the second housing 220 to move in the slide-in direction (e.g., in the negative y-axis direction) or the slide-out direction (e.g., in the positive y-axis direction) with respect to the first housing 210.

The electronic device 200 includes the support bracket 225 fixed to the first space 2101 of the first housing 210. The electronic device 200 includes a pair of guide rails 226 (e.g., a linear motion (LM) guide) fixed to both sides of the support bracket 225 to guide both ends of the support member 240 in the sliding direction and simultaneously guide the second housing 220 in the sliding direction. The support bracket 225 and the pair of guide rails 226 may be fixed to the first housing 210 through a fastening component such as a screw. The support bracket 225 includes a battery mount portion (e.g., the battery mounting portion 2251 in FIG. 5A) for accommodating the battery (B) and a support portion (e.g., the support portion 2252 in FIG. 5A) formed at one end of the battery mount portion 2251 and for supporting the rear surface of the support member 240 that bends during the sliding operation of the second housing 220.The support member 2252 may have a curved outer surface formed to smoothly guide the support member 240. The support bracket 225 and the guide rail 226 may be fixed in the internal space 2101 of the first housing 210 through a fastening componentsuch as a screw. The electronic device 200 may further include a battery cover 2253 combined with the support bracket 225 to cover the mounted battery (B). In some embodiments, the battery cover 2253 may be omitted. The rack gear 262 may be fixed on the outer surface of the support bracket 225 through a fastening component such as a screw so as to extend toward the second space 2201. The rack gear 262 may be disposed at the center (e.g., center symmetrical left and right) of the support bracket 225 so as to cross the center of the electronic device 200 along the sliding direction (e.g., ±y-axis direction) of the second housing 220. This central disposition may reduce current consumption by reducing the increase in driving resistance due to eccentricity during the sliding operation.

The electronic device 200 includes at least one electrical component (or electronic component) disposed in the second space 2201. The at least one electrical component includes a first substrate 251 (e.g., a substrate assembly or a main substrate) (e.g., laminated substrates). In some embodiments, the at least one electrical component may be disposed in the first space 2101 of the first housing 210.

The electronic device 200 includes a second substrate 252 (e.g., a sub-substrate) and an antenna member 253 disposed between the first extension member (e.g., the first extension member 212 in FIG. 5A) and the first rear cover 213 in the first housing 210. The second substrate 252 and the antenna member 253 may be disposed on at least a portion of the first extension member 212. The second substrate 252 and the antenna member 253 may be electrically connected to the first substrate 251 via at least one electrical connection member (e.g., a flexible printed circuit board (FPCB) or a flexible RF cable (FRC)). The antenna member 253 includes a multi-function coil or multi-function core (MFC) antenna for performing a wireless charging function, a neat field communication (NFC) function, and/or an electronic payment function. In some embodiments, the second substrate 252 and/or the antenna member 253 maybe electrically connected to the first substrate 251 via a flexible substrate (a flexible printed circuit board (FPCB)) extending from the first space 2101 to the second space 2201 and elastically deformable.

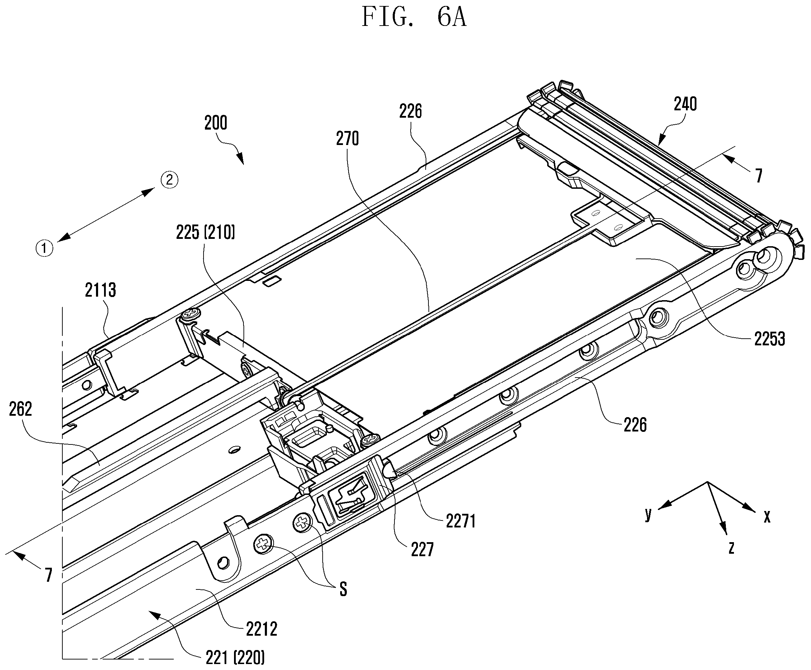

The electronic device 200 includes a pair of guide blocks 227 fixed to the second housing 220 and slidably combined with the pair of guide rails 226, respectively. Through the slidable combination between the guide rail 226 and the guide block 227, the second housing 220 may slide out from the first housing 210 by a first distance (e.g., the first distance L1 in FIG. 3A). The guide blocks 227 may be detachably fixed through a fastening component (e.g., thefastening component (S) in FIG. 6A) (e.g., a screw).

In the case it is necessary to separate an electronic component (e.g., the battery) disposed in the first space 2101 of the first housing 210 for maintenance, the second housing 220 can be moved by a second distance(e.g., the second distance L2 in FIG. 3C) greater than the first distance L1 merely by releasing the fixation of the guide block 227 to the second housing 220 through disassembling thefastening component(S). This additional slide-out operation of the second housing 220 allows the support member 240 overlapping with a part of the electronic component to be moved to a position that does not overlap with the electronic component (e.g., a position that does not interfere with the electronic component), thereby helping to facilitate separation of the electronic component from the electronic device 200.

FIG. 4B is a cross-sectional view of a part of the flexible display taken along line 4b-4b of FIG. 4A.

With reference to FIG. 4B, the flexible display 230 includes a window layer 410 and also include a polarizer (POL) 420 (e.g., a polarizing film), a display panel 430, a polymer layer 431, at least one functional layer 440, and a support plate 450, which are sequentially arranged on the rear surface of the window layer 410. The electronic device 200 includesthe support member 240 disposed to support at least a portion of the flexible display under the functional layer 440. According to an embodiment, the support member 240 includes a plurality of support bars 241 and 242 attached to the rear surface of the support plate 450 through adhesion or welding at a designated interval. The window layer 410, the polarizer 420, the display panel 430, the polymer layer 431, the support plate 450, and the support member 240 may be attached to each other via an adhesive layer P (e.g., an adhesive or a glue). For example, the adhesive layer P includes at least one of a pressure sensitive adhesive (PSA), an optical clear adhesive (OCA), a heat-reactive adhesive, a general adhesive, or a double-sided tape. In an embodiment, in the case where the flexible display 230 is a POL-less display, the polarizer may be omitted, and a transparent reinforcing layer (e.g., a buffer layer) may be further disposed in that position.

The window layer 410 includes a glass layer. The window layer 410 includesan ultra-thin glass (UTG). In some embodiments, the window layer 410 includes a polymer. In this case, the window layer 410 includes polyethylene terephthalate (PET) or polyimide (PI). In some embodiments, the window layer 410 may be arranged in a plurality of layers to include a glass layer and a polymer. In some embodiments, the flexible display 230 may further include a coating layer formed on at least part of an upper surface, a rear surface, or a side surface of a glass layer formed as part of the window layer 410, or of a polymer (e.g., a protective film layer) arranged on top of the glass layer. In this case, the coating layer includes a hard coating (HC) layer, an anti-reflection (AR)/low reflection (LR) coating layer, a shatter proof (SP) coating layer, or an anti-fingerprint (AF) coating layer. In some embodiments, the coating layer may be formed in at least one positionbetween the polymer and the glass layer, on a side surface of the polymer, or on a rear surface or a side surface of the glass layer.

The display panel 430 includes a plurality of pixels and a wiring structure (e.g., an electrode pattern). The polarizer 420 may selectively transmit light generated from a light source of the display panel 430 and vibrating in a certain direction. The display panel 430 and the polarizer 420 may be formed integrally. The flexible display 230 includes a touch panel (not shown).

The polymer layer 431 may be disposed under the display panel 430 to provide a dark background for securing visibility of the display panel 430 and may be formed of a buffer material for buffering. In some embodiments, to ensure waterproofing of the flexible display 230, the polymer layer 431 may be removed or disposed under the support plate 450.

The flexible display 230 includesthe at least one functional layer 440 disposed under the polymer layer 431. According to an embodiment, the functional layer 440 includes a protective layer (e.g., a TPU layer) for reducing deformation due to bending of the support member 240, a graphite sheet for heat dissipation, a force touch FPCB, a fingerprint sensor FPCB, an antenna radiator for communication, a conductive/non-conductive tape, or a digitizer. The digitizer includes a plurality of conductive patterns (e.g., coil patterns) disposed on a dielectric substrate (e.g., a dielectric film or a dielectric sheet) to detect a resonant frequency of an electromagnetic induction scheme applied from an electronic pen.

The support plate 450 may provide rigidity and flexibility to the flexible display 230. For example, the support plate 450 may be formed of a non-metallic thin-plate materialhaving rigid properties for supporting the display panel 430, such as fiber reinforced plastics (FRP) (e.g., carbon fiber reinforced plastics (CFRP) or glass fiber reinforced plastics (GFRP)). The support plate 450 includes a pattern 451 arranged in an area corresponding to the support member 240 to help improve the bendability of the flexible display 230. The pattern 451 may have a plurality of openings and/or recesses arranged at a certain interval. The bendability of the support plate 450 may be determined through at least one of the size, shape, or arrangement density of at least some of the plurality of openings and/or the plurality of recesses. In some embodiments, the support plate 450 may be formed of a metallic material such as SUS, Cu, Al, or a metal clad material (e.g., a laminated member in which SUS and Al are alternately arranged). The support plate 450 may help reinforce the rigidity of the electronic device 200, shield ambient noise, and serve as a heat dissipation means for dissipating heat emitted from surrounding heat-emitting components.

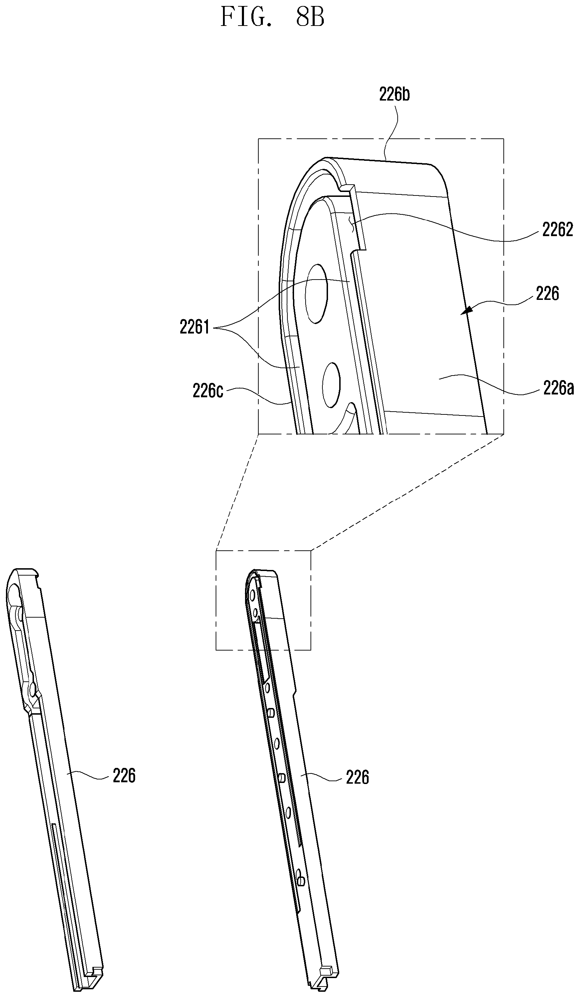

The support member 240 includes a plurality of support bars 241 and 242 spaced apart at a certain interval and attached to the rear surface of the support plate 450. The plurality of support bars 241 and 242 have guide pins 2411 and 2421 formed to have a specified amount of protrusion from eachside surface. The guide pins 2411 and 2421 are accommodated in guide slits (e.g., the guide slits 2261 in FIG. 8B) of a guide rail 226 to be described below. The first guide pin 2411 of the first support bar 241, which is disposed at an end of the plurality of support bars 241 and 242 and accommodated in the internal space 2101 of the first housing 210 in the slide-in state and/or the slide-out state, has a first protrusion length smaller than a second protrusion length of the guide pins (e.g., 2421) of the remaining support bars (e.g., 242), so that it allows the second housing 220 to be detached from the guide rail 226 by an additional slide-out operation and helps to facilitate easy separation of peripheral electronic components (e.g., the battery (B)).

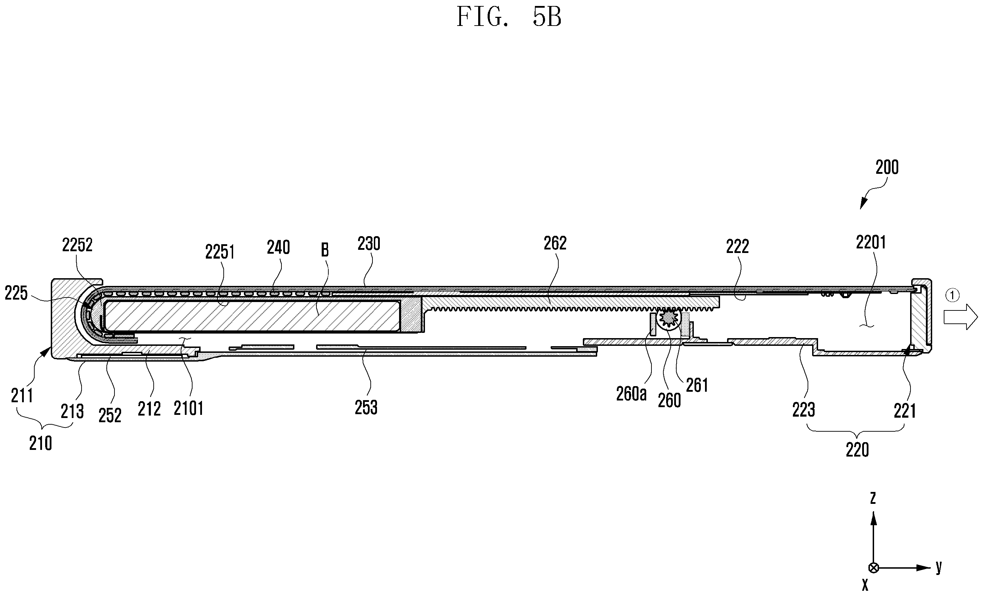

FIG. 5A is a cross-sectional view of the electronic device taken along line 5a-5a of FIG. 2A. FIG. 5B is a cross-sectional view of the electronic device taken along line 5b-5b of FIG. 3A.

In describing the electronic device 200 of FIGS. 5A and 5B, components that are substantially the same as those of the electronic device 200 of FIG. 4A are given the same reference numerals, and detailed descriptions thereof may be omitted.

With reference to FIGS. 5A and 5B, the electronic device 200 includesthe first housing 210 having the first space 2101, the second housing 220 having the second space 2201, the support member 240 connected to the second housing 220 and at least partially accommodated into the first space 2101 in the slide-in state, the flexible display 230 disposed to be supportedby at least a portion of the support member 240 and at least a portion of the second housing 220, the rack gear 262 fixed to the first space 2101 and extending into the second space 2201, and the driving motor 260disposed in the second space 2201 and including the pinion gear 261 gear-engaged with the rack gear 262. The driving motor 260 can automatically move the second housing 220 in the slide-out direction (direction①) or the slide-in direction (direction②) with respect to the first housing 210 through the gear engagement of the pinion gear 261 and the rack gear 262. In some embodiments, by a change in the arrangement of the drive motor 260 and the rack gear 262, the first housing 210 may be automatically moved in the slide-out direction (direction②) or the slide-in direction (direction①) from the second housing 220. The first housing 210 includesthe first lateral member 211 and the first rear cover 213 combined with the first extension member 212 extending from the first lateral member 211. The second housing 220 includesthe second lateral member 221 and the second rear cover 223 combined with the second extension member 222 extending from the second lateral member 221.

A part of the second housing 220 may be accommodated in the first space 2101 of the first housing 210 in the slide-instate (the state shown in FIG. 5A)of the electronic device 200. At least a part of the flexible display 230 may be accommodated by being bent into the first space 2101 together with the support member 240, thereby not being visible from the outside. In this case, the flexible display 230 may have a first display area (e.g., a display area corresponding to the first portion 230a in FIG. 3A) exposed to the outside.

Fortransition to the slide-out state,at least a part of the second housing 220 may be moved outwardly from the first housing 210 at least partially along the first direction (direction①) through driving of the driving motor 260. The flexible display 230 may bemoved together with the support member 240 in the slide-out state (the state shown in FIG. 5B) of the electronic device 200 while beingsupported by the support bracket 225, so that a portion accommodated in the first space 2101 can be exposed to be visibleat least in part from the outside. In this case, the flexible display 230 may be exposed to the outside with a second display area (e.g., a display area including the first portion 230a and the second portion 230b in FIG. 3A) that is expanded more than the first display area. In some embodiments, the rack gear 262 may be disposed in the second housing 220, and the driving motor 260 including the pinion gear 261 may be disposed in the first housing 210.

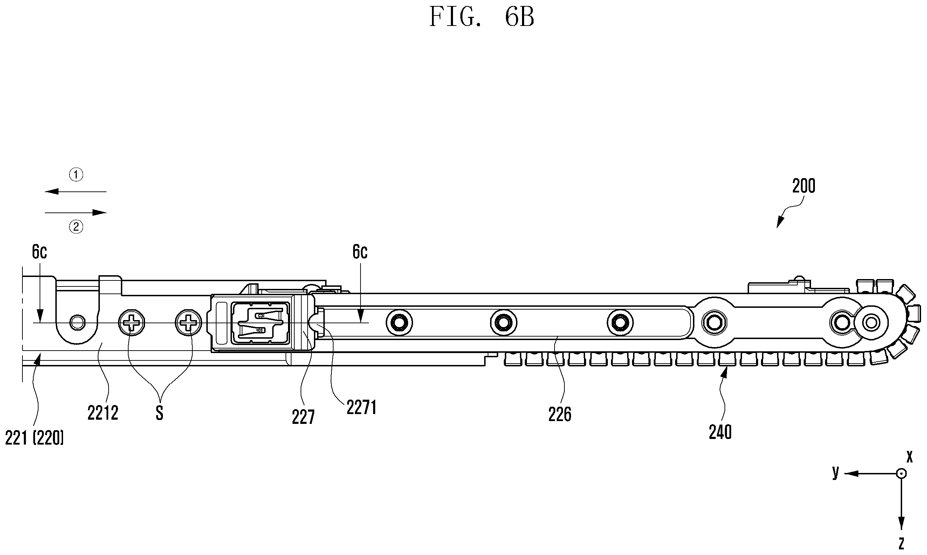

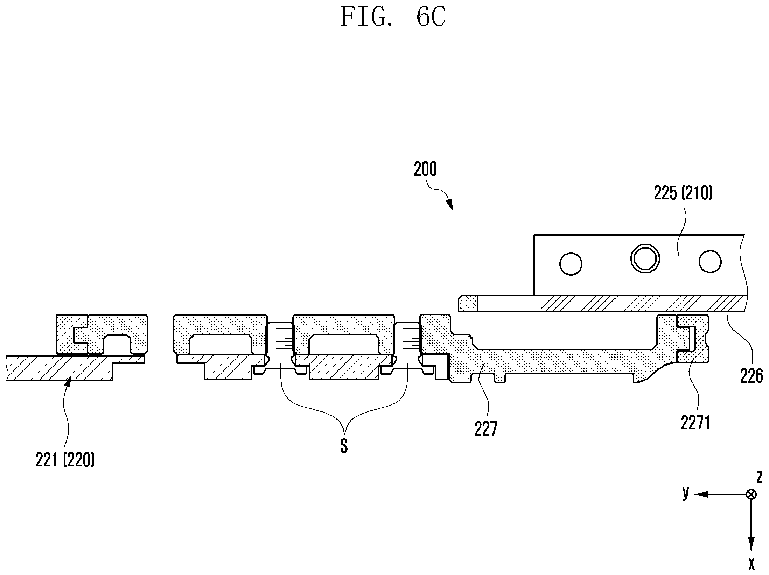

FIG. 6A is a perspective view of a part of an electronic device in which a guide rail and a guide block are combined. FIG. 6B is a side view of a part of an electronic device. FIG. 6C is a plan view of the electronic device taken along line 6c-6c of FIG. 6B.

With reference to FIGS. 6A to 6C, the electronic device 200 includesthe first housing 210, the second housing 220, the support member 240 connected to the second housing 220 and accommodated at least partially in the internal space (e.g., the first space 2101 in FIG. 5A)of the first housing 210, and the flexible display (e.g., the flexible display 230 in FIG. 5A) disposed to be supported by at least a portion of the support member 240 and at least a portion of the second housing 220. The electronic device 200 includesthe pair of guide rails 226 respectively fixed to left and right sides of the support bracket 225 disposed in the first housing 210. For example, the guide rails 226 may be positioned between the support bracket 225 and the first lateral member (e.g., the first lateral member 211 in FIG. 5A) in the internal space of the first housing. In some embodiments, the guide rails 226 may be positioned directly in the first housing 210 without the support bracket 225.

The electronic device 200 includesthe pair of guide blocks 227 (e.g., slide blocks) disposed in the second housing 220 and slidably combined with the pair of guide rails 226. The guide blocks 227 may be disposed on left and right inner walls in the internal space (e.g., the second space 2201in FIG. 5A) of the second housing 220 and fixed bya fastening component (S) fastened from an outer surface of the electronic device. The first housing 210 and the second housing 220 are slidably combined with each other through a sliding combination structure of the guide rails 226 and the guide blocks 227. The sliding distance of the second housing 220 moving from the first housing 210 may be determined through a stopper 2271 that is disposed on the guide rail 226 and/or the guide block 227 and limits the sliding distance relative to each other.

The support member 240 isdisposed to be guided by the guide rail 240,interlocked with the movement of the second housing 220. The support member 240 isdisposed to support the rear surface of the flexible display (e.g., the flexible display 230 in FIG. 5A). At least a portion of the support member 240 isdisposed in a manner to be accommodated in the internal space (e.g., the first space 2101 in FIG. 5A)of the first housing 210. In the slide-in state,the support member 240 isat least partially accommodated in the first housing 210 together with a portion of the flexible display 230. In the slide-out state,the support member 240 at least partially slides out from the first housing 210 together with a portion of the flexible display 230. In this case, at least a portion of the support member 240 is maintained in a state of being accommodated in the internal space (e.g., the first space 2101 in FIG. 5A)of the first housing 210, and this accommodated portion of the support member 240 may be disposed at a position overlapping with an electronic component arranged in the first housing 210.

In the slide-out state, the support member 240 positioned in the internal space 2101 of the first housing 210 needs to be additionally moved to a position that does not overlap with the electronic component (e.g., the battery (B) in FIG. 5A) for easy separation of the electronic component for removal from the electronic device. For the additional movement of the support member 240, the guide block 227 can be separated by disassembling a fastening component (e.g., thefastening component (S) in FIG. 6A) (e.g., a screw). For example, in the case it is necessary to separate an electronic component (e.g., the battery) disposed in the first space 2101 of the first housing 210 for maintenance of the electronic device 200, the support member 240 can be moved by a second distance (e.g., the second distance L2 in FIG. 3C) greater than the first distance L1 merely by an operation of releasing the fixation of the guide block 227 fixed to the second housing 220 through disassembling the fastening component (S), thereby being moved to a non-interfering position allowing easierseparation of the electronic component.

The electronic device 200 includes at least one driving belt 270 (e.g., a tension belt) to support the flexible display 230 and reduce lifting of the flexible display 230 by providing uniform tension to the support member 240 during operation. In an embodiment, one end of the driving belt 270 may be fixed to the end of the support member 240.

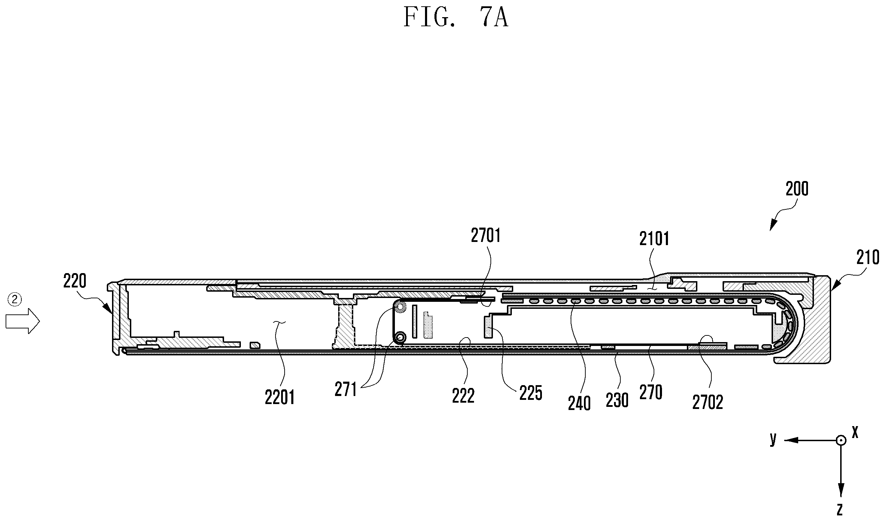

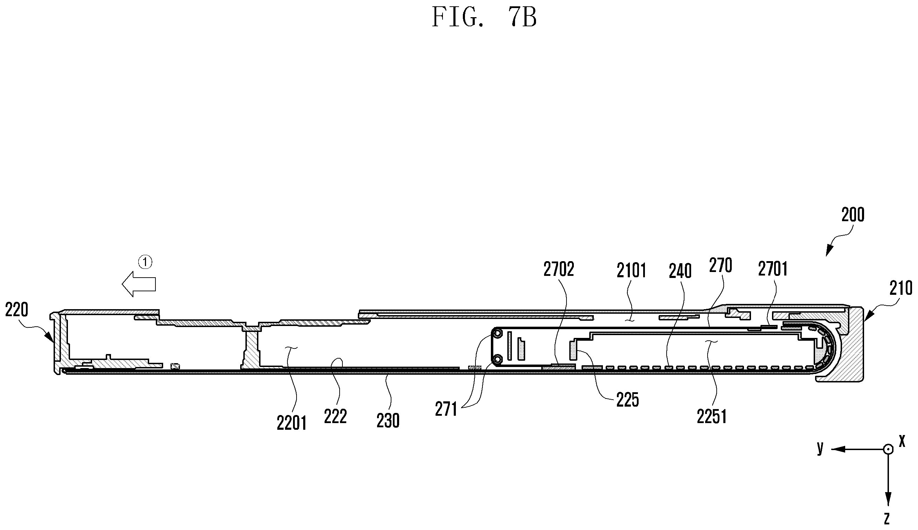

FIG. 7A is a cross-sectional view of the electronic device in a slide-in state taken along line 7-7 of FIG. 6A. FIG. 7B is a cross-sectional view of the electronic device in a slide-out state taken along line 7-7 of FIG. 6A.

With reference to FIGS. 7A and 7B, the driving belt 270 can help reduce the driving resistance caused by eccentricity of the second housing 220 as it is moved by operation of the driving motor 260. In an embodiment, one end 2701 of the driving belt 270 may be fixed to the end of the support member 240, and the other end 2702 may be fixed to at least a portion of the second extension member 222 of the second housing 220. The driving belt 270 may be disposed in a manner such that it is wound around at least one roller 271 rotatably disposed on the support bracket 225. In an embodiment, when the second housing 220 transitions from the slide-in state to the slide-out state, the one end 2701 of the driving belt 270 may move along the support member 240 in a first spatial direction (e.g., in the negative y-axis direction), and the other end 2702 of the driving belt 270 may move along the second housing 220 by a corresponding amount of movement in a second spatial direction (e.g., in the positive y-axis direction). For example, the driving belt 270 moves while being supported by the at least one roller 271 and a support portion (e.g., the support portion 2252 in FIG. 5A) of the support bracket 225, but the distance from the one end 2701 fixed to the support member 240 to the other end 2702 fixed to the second housing 220 may not change. Accordingly, the driving belt 270 may help the flexible display 230 to always remain tight even during a sliding operation.

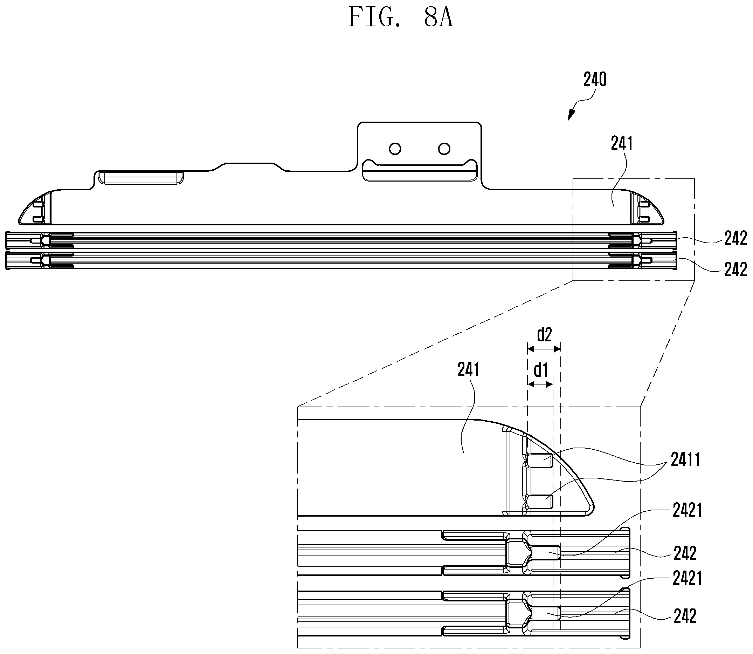

FIG. 8A is a schematic diagram of a part of a support member.

With reference to FIG. 8A, the support member 240 includes a plurality of support bars 241 and 242 arranged at a certain interval. In an embodiment, each of the plurality of support bars 241 and 242 includes a guide pin 2411 or 2421 that is guided by being at least partially accommodated in a guide slit (e.g., the guide slit 2261 in FIG. 8B) (e.g., a guide groove) formed in a guide rail (e.g., the guide rail 226 in FIG. 8B). The first support bar 241 (e.g., an end bar) located at the farthest end of the plurality of support bars 241 and 242 includes the first guide pin 2411. The first guide pin 2411 may have a first protruding length d1 that may be accommodated in the guide slit 2261. The guide pins 2421 of the remaining support bars 242 except the first support bar 241 may be formed to be accommodated in the guide slit 2261 and to have a second protrusion length d2 greater than the first protrusion length d1. The first support bar 241 may be formed to have the same shape as the remaining support bars 242. In some embodiments, the first support bar 241 may be formed to have a relatively greater width along the sliding direction than the remaining support bars 242.

FIG. 8B is a schematic diagram of a guide rail.

With reference to FIG. 8B, the guide rail 226 may have a first flat portion 226a, a second flat portion 226c disposed opposite the first flat portion 226a, and a curved portion 226b connecting ends of the first and second flat portions 226a and 226c. The guide rail 226 may have a guide slit 2261 formed on inner surfaces of the first flat portion 226a, the curved portion 226b, and the second flat portion 226c. The guide slit 2261 may be formed to have a width and depth for accommodating the guide pins 2411 and 2421 which are formed toprotrude at each end of the above-described plurality of support bars 241 and 242.

The guide rail 226 may have a groove 2262 (e.g., a separation groove, a notch, a groove, a slit, or a cut portion) formed from its outer surface to the guide slit 2261. The groove 2262 may be formed at a position corresponding to the position of the first guide pin 2411 of the first support bar 241 when the support member 240 further slides out (e.g., the state shown in FIG. 3C) for maintenance from the slide-out state. The groove 2262 may be formed in the first flat portion 226a or the curved portion 226b of the guide rail 226. In some embodiments, the groove 2262 may be formed from the first flat portion 226a of the guide rail 226 to at least a part of the curved portion 226b. The depth of the groove 2262 may be determined according to the first protruding length d1 of the first guide pin 2411, that is formed smaller than the second protruding length d2 of the remaining guide pins 242. In some embodiments, the first protruding length d1 of the first guide pin 2411 may be determined according to the depth of the groove 2262. For example, the groove 2262 may be formed to have a depth that allows the first guide pin 2411 of the first support bar 241 to be separated from the guide slit 2261 when the support member 240 further slides out from the slide-out state. The groove 2262 may be formed to have a depth that does not allows the guide pins 2421 of the remaining support bars 242 to be separated from the guide slit 2261 when the support member 240 further slides out from the slide-out state.

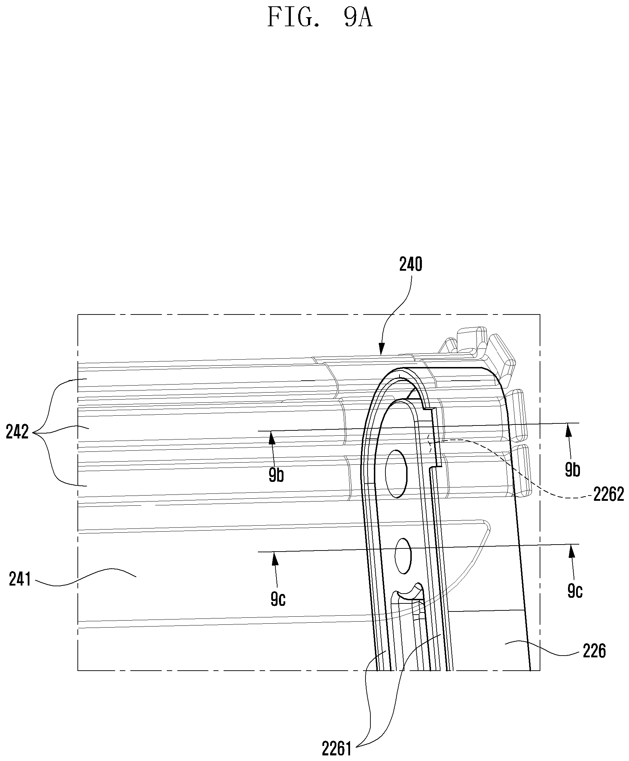

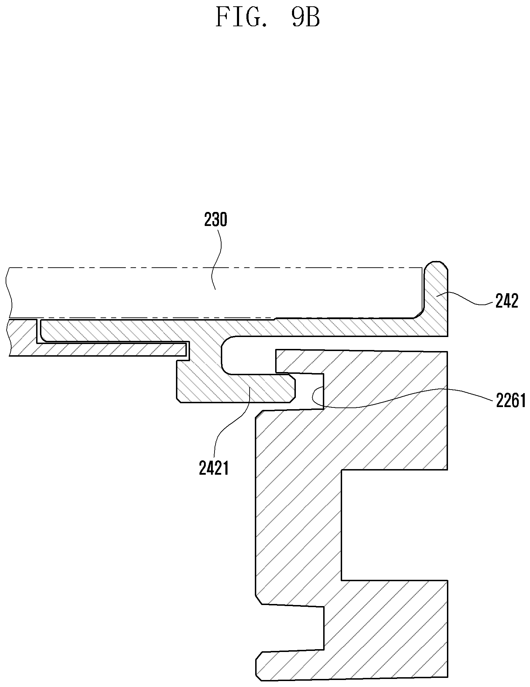

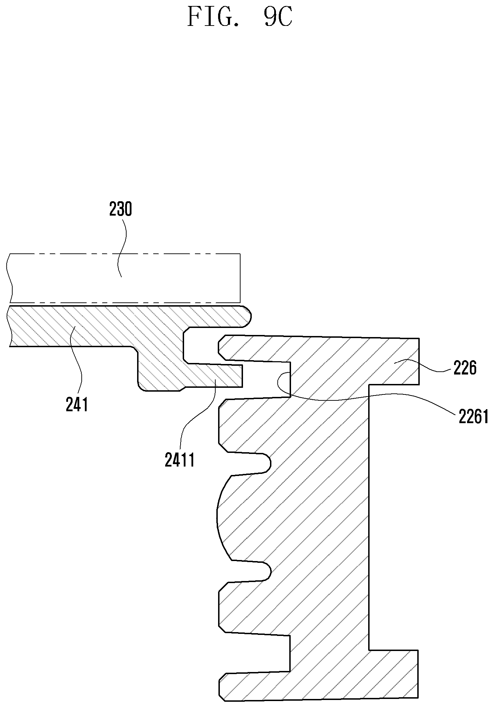

FIG. 9A is a diagram illustrating a combination state of a support member and a guide rail in a slide-out state. FIG. 9B is a cross-sectional view taken along line 9b-9b of FIG. 9A. FIG. 9C is a cross-sectional view taken along line 9c-9c of FIG. 9A.

FIG. 9A is a drawing schematically illustrating the relative arrangement relationship between the support member 240 and the guide rail 226 when the electronic device 200 transitions from the slide-in state (e.g., the first state) to the slide-out state (e.g., the second state).

With reference to FIGS. 9A to 9C, the support member 240 disposed to support the rear surface of the flexible display 230 may be arranged in such a way that the guide pins 2411 and 2421 are accommodated in the guide slit 2261 of the guide rail 226 and move along the guide slit 2261.In an embodiment, in a state that the second housing 220 slides out from the first housing 210, the plurality of support bars 241 and 242 may maintain a state in which the guide pins 2411 and 2421 are at least partially accommodated in the guide slit 2261. For example, in the slide-out state, the first support bar 241 among the plurality of support bars 241 and 242 remainsaccommodated in the guide slit 2261 of the guide rail 226 in a state where the first guide pin 2411 does not reach the groove 2262 formed in the guide rail 226. The remaining support bars 242also remain accommodated in the guide slit 2261 of the guide rail 226 via the guide pins 2421. Thus,after moving along the guide rail 226, the support member 240 as a whole is maintained in that.

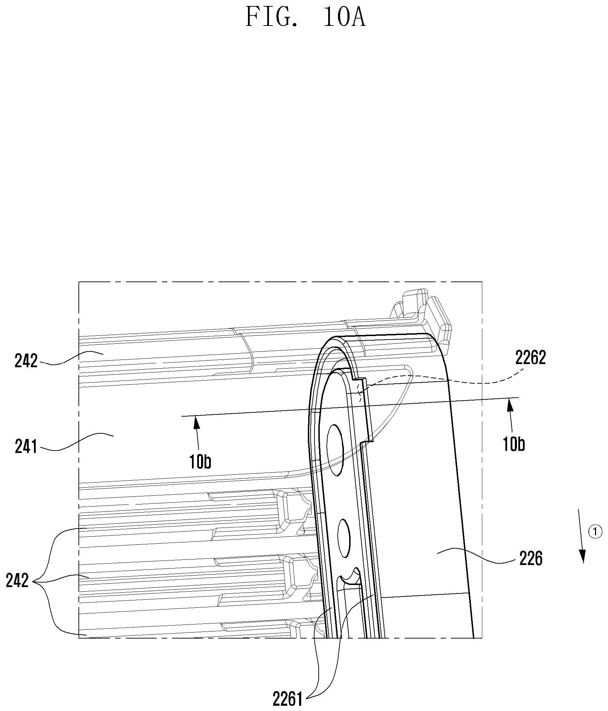

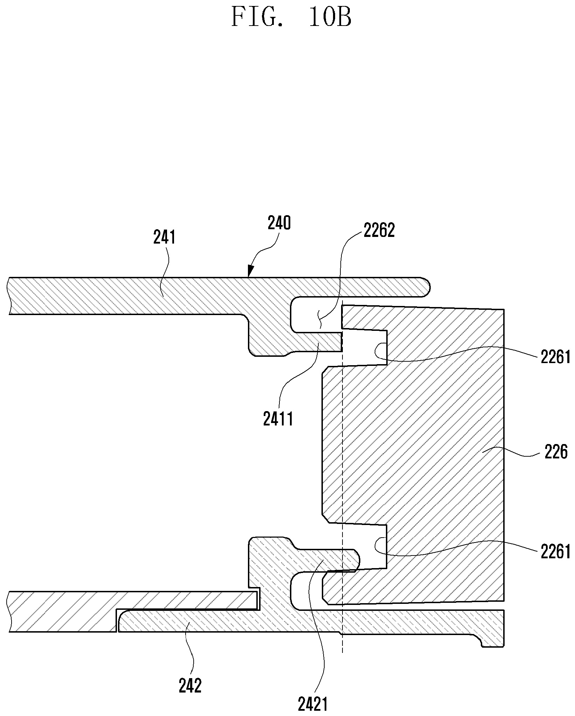

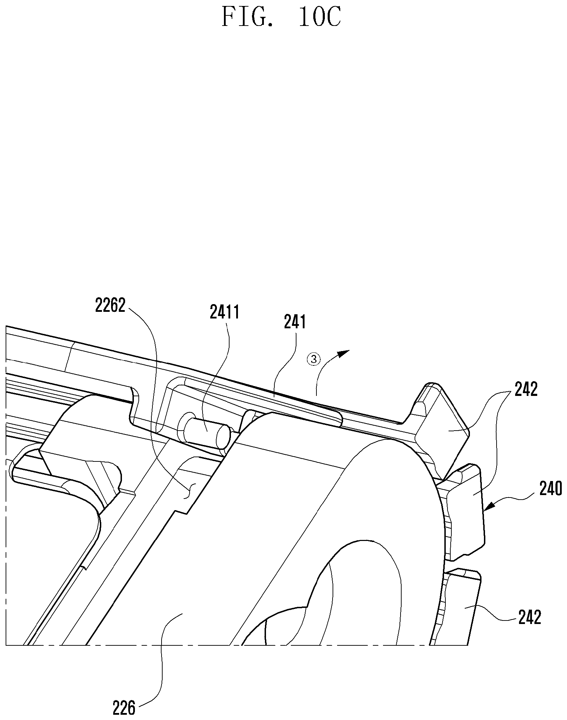

FIG. 10A is a diagram illustrating a combination state of a support member and a guide rail in an additional slide-out state. FIG. 10B is a cross-sectional view taken along line 10b-10b of FIG. 10A. FIG. 10C is a drawing illustrating a state in which a first support bar is disassembled from a guide rail in an additional slide-out state.

For maintenance of the electronic device 200, it may be necessary to replace electronic components such as the battery (B) disposed in the first housing 210. In a comparative example, in order to additionally move the support member 240 that overlaps with the battery (B) in the slide-out state and thus interferes with the separation of the battery (B), it is necessary to separate the guide rail 226 disposed between the first housing 210 and the support bracket 225. This separation process should be performed by separating the first housing 210 and the support bracket 225, then separating the guide rail 226, and then separating the support member 240 (which is guided by the guide rail 226). As can be appreciated, there are problems that the number of processes for disassembly increases and reassembly ishigh.

The electronic device 200 allows the support member 240 to move to a non-interfering position that does not overlap with the battery (B) merely by an operation of releasing the fixation of the guide block (e.g., the guide block 227 in FIG. 6A) fixed to the support bracket 225 of the second housing 220, thereby allowing efficient replacement of the battery (B) and easy reassembly.

With reference to FIGS. 10A to 10C, only by disassembling the fastening component (e.g., the fastening component (S) in FIG. 6A) that fixes the guide block (e.g., the guide block 227 in FIG. 6A) to the second housing 220, the second housing 220 can further slide out from a state of sliding out by the first distance (e.g., the first distance L1 in FIG. 3A) to the second distance (e.g., the second distance L2 in FIG. 3C) greater than the first distance L1. Through the additional slide-out operation of the second housing 220, the flexible display (e.g., the flexible display 230 in FIG. 3C) disposed to be interlocked with the second housing 220 can also be moved. The support member 240 can be moved together with this movement of the flexible display 230.

In the additional slide-out state, the first guide pin 2411 formed on the first support bar 241 of the support member 240 can be moved to a position corresponding to the groove 2262 formed in the guide rail 226. Accordingly, through an operation in which the first guide pin 2411 is removed from the groove 2262, the first support bar 241 can be removed from the guide slit 2261 of the guide rail 226. The remaining support bars 242 of the support member 240 can continuously maintain a state of being guided by the guide rail 226 because the guide pins 2421 formed greater than the depth of the groove 2262 can be smoothly moved along the guide slit 2261.

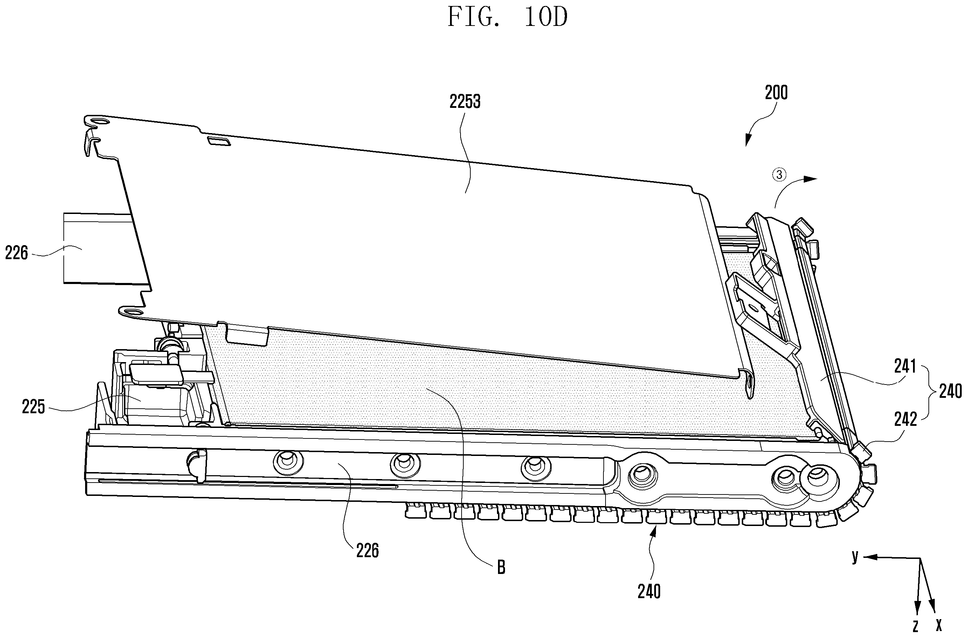

FIG. 10D is a drawing illustrating an operation of disassembling a battery cover and a battery in an additional slide-out state.

With reference to FIG. 10D, the first support bar 241 of the support member 240 may be separated to the outside of the guide rail 226 through the groove 2262 in the additional slide-out state. In an embodiment, because the first support bar 241 is separated to the outside of the guide rail 226, which is a non-interfering position, from an interference position that prevents the separation of the battery (B), the battery (B) and the battery cover 2253 placed on the support bracket 225 can be easily separated from the first housing 210.

Thus, only the first support bar 241 of the support member 240 is configured to be detached from the guide rail 226 for easy separation of the battery (B) and/or the battery cover 2253. In another example, depending on the setting of the length of the groove 2262 formed in the slide-out direction and the additional slide-out distance of the support member 240, at least two guide pins sequentially positioned from the end of the support member 240 may be configured to be detached through the groove 2262.

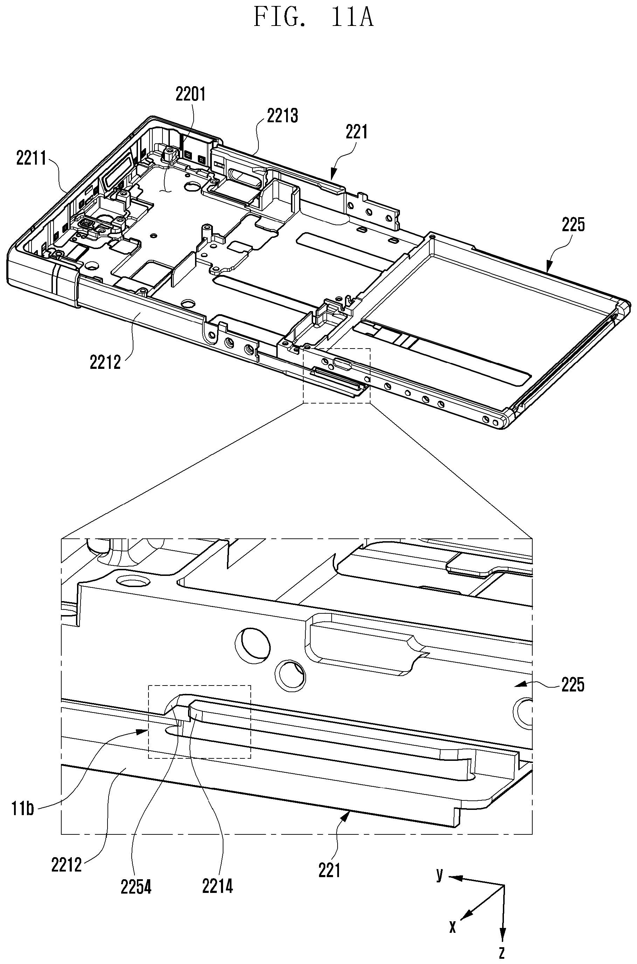

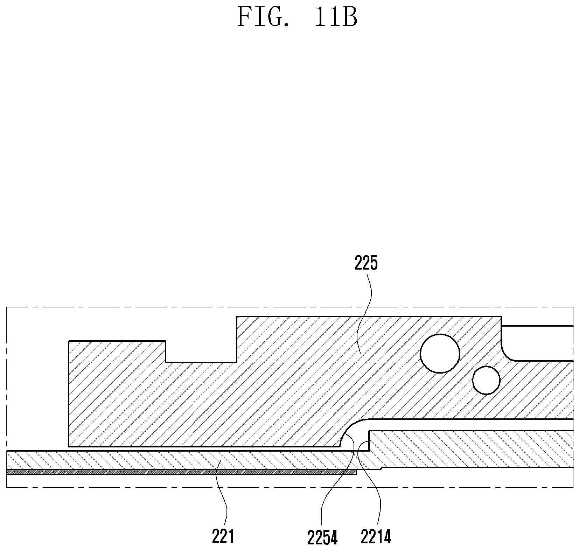

FIG. 11A is a drawing illustrating a hooking structure of first and second housings. FIG. 11B is a drawing illustrating the area 11b of FIG. 11A.

When the second housing 220 further slides out in the slide-out direction to avoid interference with the support member 240, reassembly may be difficult if the second housing 220 is completely separated from the first housing 210. Therefore, in the electronic device 200 according to embodiments of the disclosure,a hooking structure may be provided to prevent the second housing 220 from being completely separated from the first housing 210 even if the second housing 220 further slides out from the first housing 210.

With reference to FIGS. 11A and 11B, the electronic device 200 includes a first hooking portion 2254 formed on the guide bracket 225 and a second hookingportion 2214 formed on the second lateral member 221 at a position corresponding to the first hooking portion 2254. The first hooking portion 2254 may be formed in the first housing 210. The first hooking portion 2254 and the second hooking portion 2214 are positioned so as not to interfere with each other during a general sliding operation in which the electronic device 200 transitions from the slide-in state to the slide-out state. After the second housing 220 further slides out from the first housing 210 by a designated distance, the first hooking portion 2254 and the second hooking portion 2214 are positioned so as to interfere with each other. The first hooking portion 2254 and/or the second hooking portion 2214 includes a stopper formed integrally with each of the support bracket 225 and the second lateral member 221 or disposed separately. Therefore, through this hooking structure, even if the second housing 220 further slides out from the first housing 210, it is not completely separated from the first housing 210, which can help facilitate reassembly.

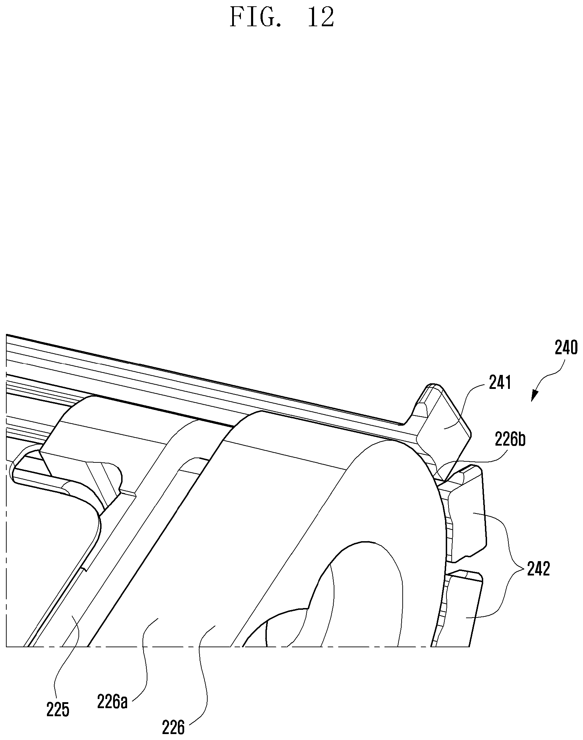

FIG. 12 is a drawing illustrating a position of a first support bar in an additional slide-out state.

As illustrated in FIG. 12, the guide rail 226 may not have a groove (e.g., the groove 2262 in FIG. 10A). For example, within a range where the second housing 220 is not completely separated from the first housing 210, the support member 240 may further slide out along the guide slit 2261 of the guide rail 226 so as not to interfere with the separation of the battery (B) through the arrangement configuration of the first and second hooking portions 2254 and 2214. This additional slide-out operation may help in the smooth separation of the battery (B). In this case, the first support bar 241 of the support member 240 may be moved to at least a part of the curved portion 226b of the guide rail 226 in the additional slide-out state.

According to various embodiments, an electronic device may include a flexible display (e.g., the flexible display 230 in FIG. 3A), a first housing (e.g., the first housing 210 in FIG. 3A), a second housing (e.g., the second housing 220 in FIG. 3A) that is slidably combined with the first housing, a support member (e.g., the support member 240 in FIG. 4A) that supports at least a portion of the flexible display and moves according to a sliding operation of the second housing relative the first housing, a guide rail (e.g., the guide rail 226 in FIG. 4A) that is disposed in the first housing and guides a movement of the support member, a guide block (e.g. the guide block 227 in FIG. 4A) that is disposed in the second housing and slidably combined from the guide rail to a first length (e.g., the first length L1 in FIG. 3A), anda fastening member (e.g., the fastening member S also referred to as the fastening component S in FIG. 6A) that detachably connects the guide block to the second housing,wherein the second housing may be configured to be slidable by a second length (e.g., the second length L2 in FIG. 3C) greater than the first length through disassembly of the fastening member.

According to various embodiments, when the second housing is moved by the second length through thedisassembly of the fastening member, the guide rail and the guide block may maintain the first length.

According to various embodiments, based on movement of the second housing, the support member may be additionally moved by a designated sliding distance in aslide-out direction from the slide-out state.

According to various embodiments, the first housing may include a lateral member (e.g., the first lateral member 211 in FIG. 4A) and an extension member (e.g., the first extension member 212 in FIG. 5A) extending from the lateral member to an internal space (e.g., the first space 2101 in FIG. 4A), and include at least one electronic component (e.g., the battery B in FIG. 4A) disposed in the internal space.

According to various embodiments, at least a portion of the support member may bedisposed so as to at least partially overlap with the at least one electronic component when the extension member is viewed from above.

According to various embodiments, in case that the support member is additionally moved, the support member may be positioned so as not to overlap with the at least one electronic component when the extension member is viewed from above.

According to various embodiments, the at least one electronic component may include a battery (e.g., the battery B in FIG. 4A) disposed in the internal space.

According to various embodiments, the support member may include a plurality of support bars (e.g., the first support bar 241 and the remaining support bars 242 in FIG. 8A) disposed at a designated interval on a rear surface of the flexible display and each including a guide pin (e.g., the first guide pin 2411 and the second guide pin 2421 in FIG. 8A) protruding at an end, andthe plurality of support bars may be guided in a manner that the guide pin is inserted into a guide slit (e.g., the guide slit 2261 in FIG. 8B) formed at a corresponding position of the guide rail and then moved.

According to various embodiments, the support member may include a first support bar (e.g., the first support bar 241 in FIG. 8A) disposed at an end and including a first guide pin (e.g., the first guide pin 2411 in FIG. 8A), anda first protruding length (e.g., the first protruding length d1 in FIG. 8A) of the first guide pin may be smaller than a second protruding length (e.g., the second protruding length d2 in FIG. 8A) of remaining guide pins.

According to various embodiments, the guide rail may have a groove (e.g., the groove 2262 in FIG. 8B) formed from an outer surface to the guide slit, andwhen the support member is additionally moved, the first support bar may be separated to outside of the guide rail through an operation in which the first guide pin is separated through the groove.

According to various embodiments, the remaining guide pins may be not separated through the groove when the support member is additionally moved.

According to various embodiments, a depth of the groove may be determined according to a first protrusion length of the first guide pin which is formed smaller than protrusion lengths of the remaining guide pins.

According to various embodiments, the first support bar may be formed to have a greater width than the remaining support bars in the additional slide-out direction.

According to various embodiments, a first hooking portion (e.g., the first hooking portion 2254 in FIG. 11A) positioned in at least a part of the first housing, anda second hooking portion (e.g., the second hooking portion 2214 in FIG. 11A) positioned at a position corresponding to the first hooking portion in at least a part of the second housing may be included, wherein a slide-out distance of the second housing may be determined according to arrangement of the first and second hooking portions.

According to various embodiments, the first and second hooking portionsmay be arranged to determine a distance by which the support member is further moved from the slide-out state.

According to various embodiments, the second housing may maintain a state of being combined with the first housing through a hooking operation of the first and second hooking portions when the support member is additionally moved.

According to various embodiments, the first housing may further include a support bracket (e.g., the support bracket 225 in FIG. 4A), and the guide rail may include a pair of guide rails arranged on both sides of the support bracket between the support bracket and the first housing.

According to various embodiments, an electronic device may include a flexible display (e.g., the flexible display 230 in FIG. 3A), a first housing (e.g., the first housing 210 in FIG. 3A), a second housing (e.g., the second housing 220 in FIG. 3A) that is slidably combined with the first housing, a support member (e.g., the support member 240 in FIG. 4A) that supports at least a portion of the flexible display and moves according to a sliding operation of the second housing relative the first housing, a guide rail (e.g., the guide rail 226 in FIG. 4A) that is disposed in the first housing and has a guide slit (e.g., the guide slit 2261 in FIG. 8B) for guiding a movement of the support member, and a guide block (e.g., the guide block 227 in FIG. 4A) that is disposed in the second housing and slidably combined from the guide rail to a first length (e.g., the first length L1 in FIG. 3A), wherein the support member may include a plurality of support bars (e.g., the first support bar 241 and the remaining support bars 242 in FIG. 8A) arranged at a designated interval on a rear surface of the flexible display and each including a guide pin (e.g., the first guide pin 2411 and the second guide pin 2421 in FIG. 8A) protruding at an end to be accommodated in the guide slit, and a first guide pin (e.g., the first guide pin 2411 in FIG. 8A) of a first support bar (e.g., the first support bar 241 in FIG. 8A) arranged at an end of the support member among the plurality of support bars may have a first protruding length (e.g., the first protruding length d1 in FIG. 8A) smaller than second protruding lengths (e.g., the second protruding length d2 in FIG. 8A) of the remaining guide pins.

According to various embodiments, the guide rail may have a groove (e.g., the groove 2262 in FIG. 8B)formed from an outer surface to the guide slit, and the first support bar may be separated to the outside of the guide rail through an operation in which the first guide pin is detached through the groove when the support member is further moved by a second length (e.g., the second length L2 in FIG. 3C) greater than the first length.

According to various embodiments, the remaining guide pins may not be detached through the groove while the support member is moved from the first length to the second length.

Meanwhile, the embodiments disclosed in the specification and drawings are only presented as specific examples to easily explain the technical contents of the disclosure and help the understanding of the disclosure.

## Claims

1. An electronic device comprising:
a flexible display (230);
a first housing (210);
a second housing(220) that is slidably combined with the first housing (210);
a support member (240) that supports at least a portion of the flexible display (230) and moves according to a sliding operation of the second housing (220) relative the first housing (210);
a guide rail (226) that is disposed in the first housing (210) and guides movement of the support member(240);
a guide block (227) that is disposed in the second housing (220) and slidably combined with the guide rail (226) up to a first length (L1) of sliding of the second housing (220) relative to the first housing (210); and
a fastening component(S) that detachably connects the guide block (227) to the second housing (220),
wherein the second housing (220) is slidable by a second length (L2) of sliding of the second housing (220) relative to the first housing (210)on disassembly of the fastening component (S), the second length being greater than the first length.

2. The electronic device of claim 1, wherein when the second housing (220) is moved by the second length after disassembly of the fastening component (S), the guide rail (226) and the guide block (227) remain in position at the first length (L1) of sliding of the second housing (220) relative to the first housing (210).

3. The electronic device of claim 1 or 2, wherein in response to movement of the second housing (220), the support member (240) is moved by an additional designated sliding distance in a slide-out direction, beyond a slide-out state.

4. The electronic device of any one of claims 1 to 3, wherein the first housing (210) includes a lateral member (211) and an extension member (212) extending from the lateral member (211) to an internal space (2101), and includes at least one electronic component (B) disposed in the internal space (2101).

5. The electronic device of claim 4, wherein at least a portion of the support member (240) is disposed so as to at least partially overlap with the at least one electronic component (B),when the extension member (212) is viewed from above.

6. The electronic device of claim 4 or 5, wherein in case that the support member (240) has been moved by the additional designated sliding distance, the support member (240) is positioned so as not to overlap with the at least one electronic component (B) when the extension member (212) is viewed from above.

7. The electronic device of any one of claims 4 to 6, wherein the at least one electronic component (B) comprises a battery disposed in the internal space.

8. The electronic device of any one of claims 1 to 7, wherein the support member (240) includes a plurality of support bars (241, 242) disposed at intervals on a rear surface of the flexible display (230) and each including a guide pin (2411, 2421) protruding at an end thereof, and
the plurality of support bars are guided in movement by the guide pins(2411, 2421) being contained in a guide slit (2261) formed at a corresponding position of the guide rail (226).

9. The electronic device of claim 8, wherein the support member (240) includes a first support bar (241) disposed at an end thereof and including a first guide pin (2411), and
a first protruding length (d1) of the first guide pin (2411) is smaller than a second protruding length (d2) of remaining guide pins (2421).

10. The electronic device of claim 9, wherein the guide rail (226) has a groove (2262) formed from an outer surface to the guide slit (2261), and
when the support member (240) is moved by the additionally designated sliding distance, the first support bar (241) is separated to outside of the guide rail (226) through an operation in which the first guide pin (241) is removed through the groove (2262).

11. The electronic device of claim 10, wherein the remaining guide pins (2421) are not removable through the groove (2262) when the support member (240) is moved by the additionally designated sliding distance.

12. The electronic device of claim 10 or 11, wherein the groove (2262) has a depth determined according to a first protruding length (d1) of the first guide pin (2411) which is smaller than the protruding lengths (d2) of the remaining guide pins (2421).

13. The electronic device of any one of claims 10 to 12, wherein the first support bar (241) is formed to have a greater width than the remaining support bars (242) in the direction of the additionally designated sliding distance.

14. The electronic device of any one of claims 1-13, comprising:
a first hooking portion (2254) positioned in at least a part of the first housing (210); and
a second hooking portion (2214), positioned at a position corresponding to the first hooking portion (2254),in at least a part of the second housing (220),
wherein a slide-out distance of the second housing (220) is determined according to arrangement of the first and second hooking portions (2254, 2214).

15. The electronic device of claim 14, wherein the first and second hooking portion s (2254, 2214) are arranged to determine a distance by which the support member (24 0) is further moved from the slide-out state.
